# EUROPEAN PATENT SPECIFICATION

(11) **EP 0 838 537 B1**
(45) Date of publication and mention of the grant of the patent: **17.10.2001**
(21) Application number: 96922270.2
(22) Date of filing: 09.07.1996
(51) Int. Cl.: C23C 22/00, C23C 30/00, C09D 5/08, C23C 22/68

(54) **METAL SURFACE TREATMENTS, METHOD FOR TREATING METAL SURFACE, AND SURFACE-TREATED METALLIC MATERIAL**
METALLOBERFLÄCHENBEHANDLUNG, VERFAHREN DAFÜR UND OBEFLÄCHENBEHANDELTES METALLISCHES MATERIAL
TRAITEMENTS DE SURFACE DE METAUX, PROCEDE DE TRAITEMENT DE SURFACE DE METAUX ET MATERIAU METALLIQUE AYANT SUBI UN TRAITEMENT DE SURFACE

(30) Priority: 10.07.1995 JP 17323995; 30.11.1995 JP 31236795; 28.03.1996 JP 7475196; 28.03.1996 JP 7475696; 13.06.1996 JP 15223396; 13.06.1996 JP 15223496; 13.06.1996 JP 15223596; 13.06.1996 JP 15223696
(43) Date of publication of application: 29.04.1998
(73) Proprietor: NIPPON PAINT CO., LTD., Osaka-shi Osaka 530 (JP)
(72) Inventor: KANDA, Tomoyuki, Kanagawa 247 (JP); TOUNAKA, Atsuhiko, Yokohama-shi, Kanagawa 225 (JP); SHIBATA, Yasuhiro, Yokohama-shi, Kanagawa 225 (JP); SHIMAKURA, Toshiaki, Ichikawwa-shi, Chiba 272 (JP); YASUHARA, Kiyotada, Kashiwa-shi, Chiba 277 (JP); MAEKAWA, Susumu, Yamato-shi, Kanagawa 242 (JP)
(74) Representative: Hansen, Bernd, Dr. Dipl.-Chem.
(86) International application number: JP9601902
(87) International publication number: WO9703226

(56) References cited:
- WO-A-90/12902
- WO-A-91/10756
- WO-A-91/19828
- WO-A-95/04169
- WO-A-95/28449
- WO-A-95/28509
- DE-A- 3 900 149
- GB-A- 2 250 025
- JP-A- 1 177 379
- JP-A- 2 043 375
- JP-A- 2 043 376
- JP-A- 3 031 484
- JP-A- 5 186 737
- JP-A- 5 247 381
- JP-A- 6 316 771
- JP-A- 8 025 553
- JP-A- 49 059 050
- JP-A- 49 113 735
- JP-A- 53 041 325
- JP-T- 57 501 289
- US-A- 4 457 790
- US-A- 4 795 506

## Description

### BACKGROUND OF THE INVENTION

### FIELD OF THE INVENTION

The present invention relates to a metal surface treatment agent and method, and metallic materials treated with this agent, especially a metal surface treatment agent which improves corrosion resistance, sliding ability (lubricity), preservility of treated external appearance (stainability) and coating adhesion, a treatment method using the agent, and metallic materials treated with the agent.

### Description of the Related Art

As a surface treatment of metallic materials such as coil coating of food cans, automobile bodies, steel plates, etc., conventional treatments using phosphate, chromate, non-chromate, etc. have been performed. For example, in the case of organic film coating of metal surface of iron, zinc, aluminum, etc. with paint, adhesive, etc., phosphate film is formed on the metal surface by the pretreatment with phosphate and the corrosion resistance and coating adhesiveness of the surface are improved by then forming organic coating film, such as paint, on that surface. However, metal surface treatment agents used in the conventional treatment methods, such as those with phosphate, do not sufficiently meet the recent demand for corrosion resistance, coating adhesiveness, and frictional resistance (also called sliding ability).

Therefore, in order to further improve corrosion resistance, a coating method has been employed wherein the phosphate-treated metal surface is treated with a primer coating agent prior to the final coating. However, the primer coating method has a problem that, although the corrosion resistance and coating adhesiveness of the surface are improved by this treatment, the overall procedure becomes complicated due to the additional coating process, and expensive.

As a metal surface treatment agent which aims at providing the surface with a high corrosion resistance and coating adhesiveness without primer coating, "a metal surface treatment agent for forming a complex conversion coating" has been proposed in Japanese Laid-open Publication No. Hei 5-117869. The metal surface treatment agent disclosed in said Japanese Laid-open Publication consists of a phosphate surface treatment aqueous solution containing one or more cationic nitrogen atoms and a cationic high molecular organic compound having a molecular weight 1,000 to 1,000,000 or its salt.

Also, Japanese Laid-open Publication No. Sho 51-73938 entitled "Surface Treating Method for Aluminum and its Alloy" proposes a surface treatment method for metal which aims at providing the metal surface with corrosion resistance and coating adhesiveness, especially limiting the metal to aluminum or the like. In this metal surface treating method is described a use of the treating solution comprising organic high molecular film-forming materials containing water-soluble resins such as vinyl acetate-vinilidene chloride, acrylic acid, etc. or emulsive resins and water-soluble titanium compounds as the main component.

Although, the metal surface treatment agents and solutions described above improve the corrosion resistance and coating adhesiveness of metal as compared with conventional metal surface treating agents, they still do not meet the recent required standard.

Especially, the conventional surface treatment agents mentioned above have problems that they are not suitable for preventing jamming in the case of fabricating food cans by shaping aluminum or its alloy, and do not providing metal surface with enough sliding ability in the case of coil-coating of steel plate.

Also, as for the metal surface treatment in more detail, for example, in the fabricating process of aluminum cans, the metal surface is removed of smut by treatment with acidic cleaner after the DI (drawing and ironing) process, further washed with water, and then subjected to the conversion coating process, etc. This conversion coating is performed in order to improve corrosion resistance, coating adhesiveness, and sliding ability of the metal. surface. As described above, there are two conversion coating treatments, the chromate treatment and non-chromate treatment, the latter having recently become the main treatment from the standpoint of preventing environmental pollution. As a non-chromate conversion coating agent for this non-chromate treatment, the zirconium phosphate series, for example, is now widely used.

For example, in Japanese Laid-open Publication No. Sho 57-39314 entitled "Surface Treating Method for Aluminum", a method for treating aluminum surface with an acidic solution containing a zirconium salt, hydrogen peroxide, and phosphoric acid. Also, Japanese Laid-open Publication No. Hei 7-48677 entitled "Surface Treatment Solution and Method for both Aluminum DI Cans and Tin DI Cans" proposes a surface treatment method for aluminum DI cans using a surface treating solution for DI cans containing phosphate ions and zirconium compounds at pH 2.0 to 4.0, further an oxidizing agent of less than 500 ppm and hydrofluoric acid or at least one kind of fluorides of less than 2000 ppm.

Usually, in the fabricating process, aluminum cans are thoroughly washed with water after the conversion treatment, drained, dried in open air, and then subjected to printing and painting. At the time of proceeding to the printing and painting process, the width of the belt conveyer for transporting aluminum cans suddenly narrows. At this time, there is a possibility of jamming due to contact among the cans and with the conveyer guide, leading to the reduced conveying speed and production efficiency of cans.

In general, by treatment with agents of said zirconium phosphate series, coating films of zirconium oxide and zirconium phosphate are formed on the aluminum surface, causing the aggregation destruction when the thickness of these films exceeds a certain limit, often resulting in the inferior coating adhesiveness of the surface. Furthermore, said inorganic coating film is inferior in the surface sliding ability, often causing the jamming during the transportation of cans over the belt conveyer and leading to the reduction of production efficiency of cans as described above.

Therefore, recently, a surface treatment agent to form not only inorganic but also organic coating film has been proposed. For example, Japanese Laid-open Publication No. Hei 7-331276 entitled "Surface Treating Composition and Method for Metallic Materials Containing Aluminum" proposes a surface treating composition containing phosphate ions, water-soluble zirconium compounds, fluorides and a water-soluble polyamide having at least one selected from tertiary amines and polyalkyl glycol groups.

However, when the thickness of zirconium phosphate coating film formed from the water-soluble zirconium compounds contained in the surface treatment composition described in said Japanese Laid-open Publication exceeds a certain limit, it causes the aggregation destruction of films, resulting in the reduction of coating adhesiveness.

Therefore, a surface treatment agent has been proposed which forms only an organic coating film, without forming an inorganic coating film. For example, Japanese Laid-open Publication No. Hei 4-66671 entitled "Surface Treatment Solution for Aluminum and Aluminum Alloy" describes a surface treatment solution containing phosphate ions at 1/30 g/l, condensed phosphate ions at 0.1∼10 g/l, and a water-soluble resin represented by the following formula (1) at 0.1∼20 g/l as the solid component with a pH value of 2.0∼6.5. 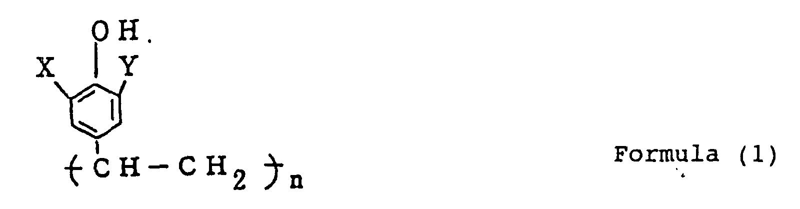 (where n = 10∼80, X and Y = H or Z represented by the following formula 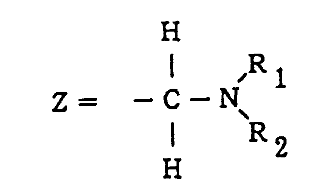 R₁ and R₂ = C₁∼ C₁₀ alkyl group or hydroxyalkyl groups, and the substitution ratio of Z per aromatic ring is 30∼ 200 mole percent.)

Also, Japanese Laid-open Publication No. Hei 7-278410 entitled "Surface Treatment Polymer Composition for Metallic Material and Treatment Method using the Same" proposes a surface treatment agent which forms an organic coating film of phenolic resin in addition to an inorganic coating film. That is, this treatment agent contains an acidic compound and a polymer represented by the following formula (2) (where X = H, C₁₋₅ alkyl or C₁₋₅ hydroxyalkyl group, groups represented by the following formula (3), etc., R¹, R² = H, OH, C₁₋₁₀ alkyl and C₁₋₁₀ hydroxyalkyl groups, etc., Y¹, Y² = H or Z group represented by the following formulae (4) or (5), R³∼R⁷ = C₁₋₁₀ alkyl, C₁₋₁₀ hydroxyalkyl groups, etc., the average number of substituted Z groups in each benzene ring of the polymer molecules = 0.2∼1. 0, n = 2∼50). In this document, a metal surface treatment method using said agent at pH 2.0∼6.5.

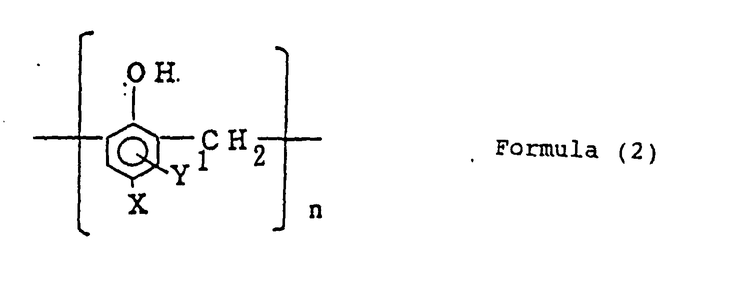

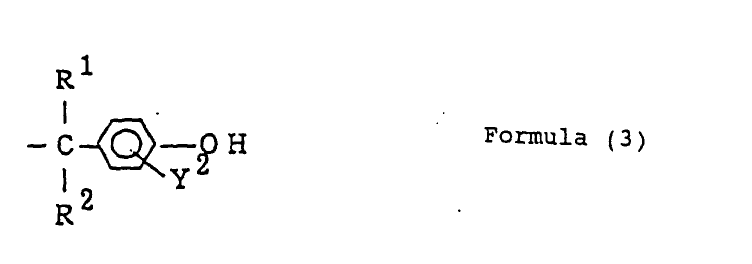

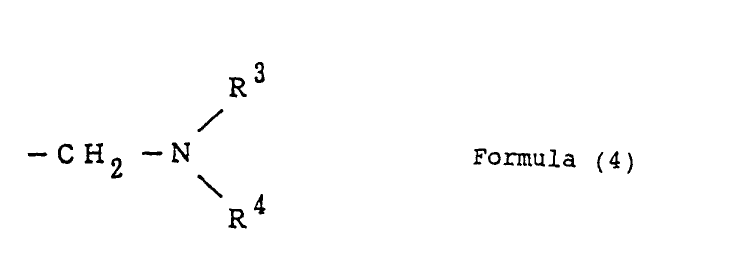

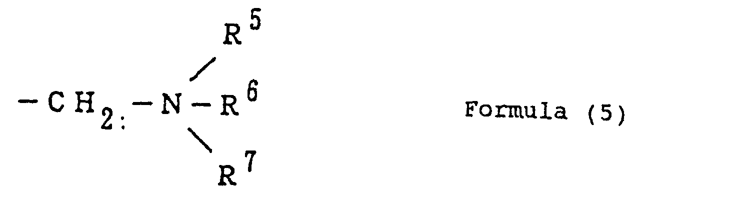

Also, Japanese Laid-open Publication No. Hei 7-278836 entitled "Surface Treatment Composition and Method for Aluminum-containing Metallic Materials" proposes a treatment agent which forms an organic coating film of bisphenol A resin, in addition to an inorganic coating film. That is, this agent contains phosphate ions, condensed phosphate ions and aqueous polymer in the weight ratio of 1∼30 : 0.1∼10 : 0.2∼20, and contacts said metal surface at 30∼65°C for 5∼60 seconds, which is then washed with water and heat-dried. Said water-soluble polymer has the chemical structure represented by the following formula 6, where Y¹ and Y² are H atoms or Z group represented by the following chemical formulae (7) or (8), and the average substitution number of Z group on the benzene ring in the polymer molecule is 0.2∼1.0.

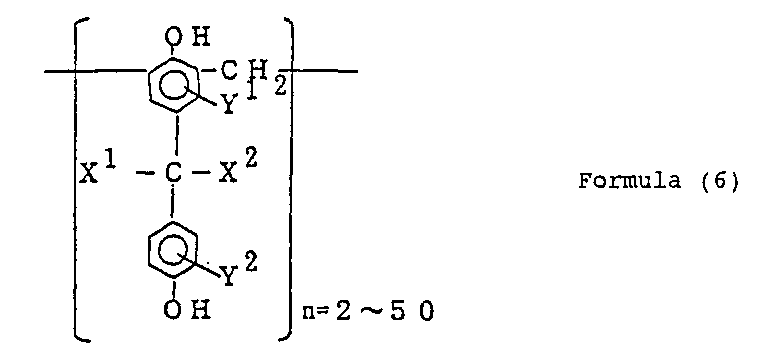

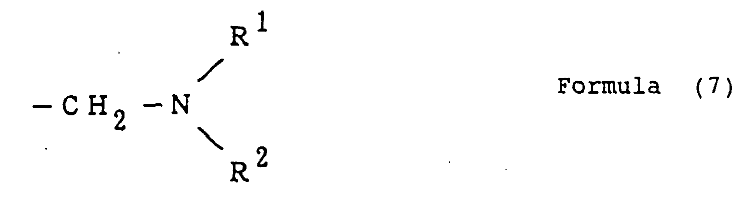

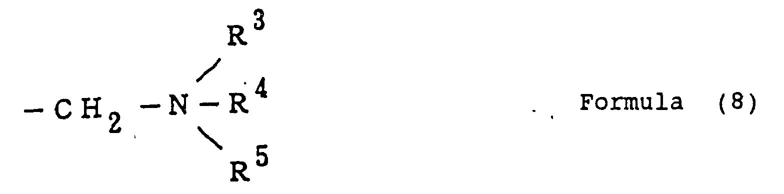

However, all surface treatment agents disclosed in Japanese Laid-open Publication No. Hei 4-66671, Hei 7-278410 and Hei 7-278836 have a problem that, unless an organic coating film layer with the thickness exceeding a certain limit is formed with said agent, the corrosion resistance of the metal surface prior to coating is insufficient. There is also a problem that, when the organic coating film becomes too thick, it generates the interference color derived from the organic polymer compounds, resulting in inferior external surface appearance.

### SUMMARY OF THE INVENTION

This invention is conceived to overcome the above described 'problem, and provides a metal surface treatment agent and method which will improve not only the corrosion resistance prior to coating (blackening resistance in boiling water in the case of aluminum DI cans), but also the sliding ability, coating adhesiveness, preservility of treated external appearance (stainability), and corrosion resistance after coating, and metallic materials surface-treated with the agent and having these properties.

A metal surface treatment agent in accordance with the present invention comprises: water and
0.01 ∼ 10 g/l of a water-soluble, water-dispersive, or emulsive organic high molecular compound or its salt having a molecular weight of 300 ∼ 10,000 which contains more than one nitrogen atom, represented by the following formula [a], and meets the following condition [b] or [c]; or
0.01 ∼ 10 g/l of a water-soluble, water-dispersive, or emulsive organic high molecular compound or its salt having a molecular weight of 1,000 ∼ 10,000 which contains more than one cationic sulfur atom and meets the following condition [d];
and, in addition to one of the above compounds, at least one compound selected from heavy metal ions in an amount of 0.01 ~ 10 g/l, oxidizing agents in an amount of 0.01 ∼ 10 g/l, inorganic acids in an amount of 0.01 ∼ 10 g/l, aluminum ions in an amount of 0.01 ∼ 0.5 g/l, polyvalent anions in an amount of 0.003 ∼ 10 g/l, etchants in an amount of 0.005 ∼ 5 g/l and etchant supplements in an amount of 0.003 ∼ 5 g/l.
[a]: 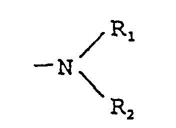 where R₁ and R₂ = H, OH or C_{1∼10} straight or branched chain alkyl groups with possible substitutions, or C_{1∼10} straight or branched chain alkanol groups with possible substitutions
   or 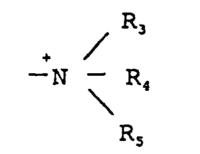 where R₃, R₄ and R₅ = H, OH or C_{1∼10} straight or branched chain alkyl groups with possible substitutions, or C_{1∼10} straight or branched chain alkanol groups with possible substitutions ;
[b]:
   containing 1∼5 phenolic groups, 1∼5 hydroxyl groups, and 1∼10 nitrogen atoms per molecular weight 500;
[c]:
   being an acrylic resin which is a copolymer comprising monomers represented by the following structural formulae [e], [f], and [g]. 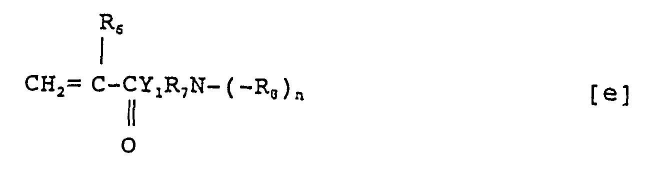 where R₆ = H or methyl group,
   R₇ = C_{1∼5} alkylene group,
   R₈ = C_{1∼5} alkyl group,
   Y₁ = -NH- or -O-,
   n = 2 or 3 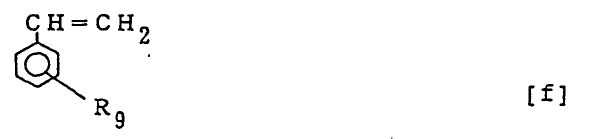
   where R₉ = methyl, ethyl, butyl or *tert*-butyl groups 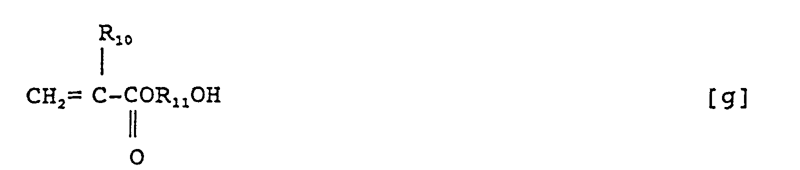 where R₁₀ = H or methyl group,
   R₁₁ = C_{1∼5} alkylene group ;
[d] containing 1∼5 phenolic groups, 1∼12 hydroxyl groups, and 0.1∼7 cationic sulfur atoms per molecular weight 500.

Preferably, at least one of the nitrogen atoms in the organic high molecular compound has the structure represented by any one of the following chemical formula (11).

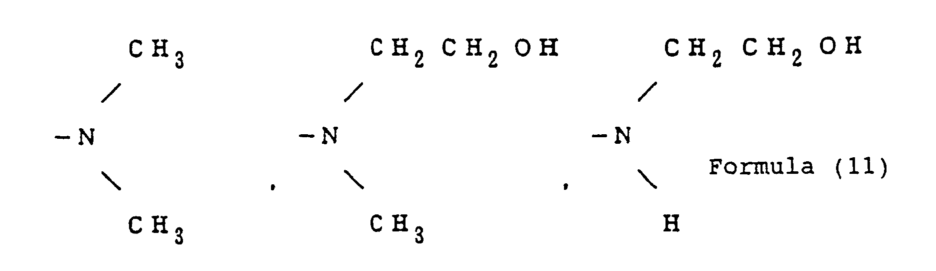

Salts of the organic high molecular compounds are exemplified by those of alkali metals such as sodium, potassium, etc., alkali earth metals such as calcium, magnesium, etc., and ammonium salts.

Also, the molecular weight of the organic high molecular compound or its salt in accordance with the present invention is 300∼10,000. When the molecular weight is less than 300, corrosion resistance and friction resistance (called sliding ability hereafter) are inferior. On the other hand, when the molecular weight exceeds 10,000, water-solubility is inferior.

The concentration of the organic high molecular compound or its salt in the metal surface treatment composition in accordance with the present invention is 0.01∼10 g/l, and preferably 0.1∼5 g/l. When the concentration is less than 0.01 g/l, the organic high molecular compound or its salt cannot exert their binder effect, resulting in the inferior physical durability of undercoating film. On the other hand, the concentration exceeding 10 g/l results in the inferior corrosion resistance.

The organic high molecular compound of the present invention preferably contains 1∼5 phenyl groups, 1∼5 hydroxyl groups and 1∼10 nitrogen atoms per 500 molecular weight. With less than one phenyl group per 500 molecular weight, corrosion resistance and sliding ability become inferior. With more than 5 phenyl groups per 500 molecular weight, water-solubility, corrosion resistance and coating adhesiveness become inferior. Also with less than one hydroxyl group per 500 molecular weight, coating adhesiveness and water-solubility of the compound in the metal surface treatment solution become inferior. On the other hand, with more than 5 hydroxyl groups per 500 molecular weight, corrosion resistance and sliding ability also become inferior. Furthermore, with less than one nitrogen atom per 500 molecular weight, coating adhesiveness of the compound and its water-solubility in the metal surface treatment solution become inferior. On the other hand, when there are more than 10 nitrogen atoms per molecular weight 500, corrosion resistance becomes inferior.

Nitrogen containing organic high molecular compounds in accordance with the present invention are preferably copolymers of the following monomers when they have, for example, the skeleton of acrylic resin. That is, (a) the nitrogen-containing acrylic monomer is exemplified by C_{1∼5} (meth)acrylamide, dimethylacrylamide, N-methylolacrylamide, N-methylaminoalkyl(meth)acrylamide, N-dimethylaminoalkyl(meth)acrylamide, N-methylalkyl(meth)acrylamide, N-methylolaminoalkyl(meth)acrylamide, N-trimethylaminoalkyl(meth)acrylamide, etc.

Also, (b) the hydroxyl group containing acrylic monomer is exemplified by C_{1∼5} hydroxyalkyl(meth)acrylate and alkylacrylate.

Furthermore, instead of jointly using said (a) nitrogen-containing and (b) hydroxyl group containing acrylic monomers, a nitrogen and hydroxyl group containing acrylic monomer such as hydroxyalkylmethyl(meth)acrylamide, etc. may be used.

(c) Phenyl group containing monomers are exemplified by styrene, t-butylstyrene, vinylphenol, vinyltoluene, benzyl(meth)acrylate and their halogen derivatives.

(d) Additional acryl monomers may be exemplified by acrylic acid, methacrylic acid C_{1∼5}, alkyl(meth)acrylate, isobornyl(meth)acrylate, etc.

Copolymerization ratios of copolymers composed of monomers described above are preferably 5∼60 weight percent for nitrogen-containing acrylic monomers (a), 20∼80 weight percent for hydroxyl group containing acrylic monomers (b), 5∼50 weight percent for phenyl group containing monomers (c), and 30 or less weight percent for other acrylic monomers (d). More preferably, these copolymerization ratios are 10∼40 weight percent for nitrogen-containing acrylic monomers, 40∼70 weight percent for hydroxyl group-containing acrylic monomers, and 10∼30 weight percent for phenyl group-containing monomers.

Furthermore, in the preferred embodiments of the present invention, the copolymerization ratios described are the mixing weight ratios of monomers at the time of copolymer production assuming that copolymers are generated according to said mixing weight ratios.

When the copolymerization ratio of nitrogen-containing acrylic monomer in said copolymer is less than 5 weight percent, nitrogen atoms at the copolymerization site of said monomer cannot be sufficiently coordinated to the metal surface, resulting in decreased coating adhesiveness. On the other hand, when the ratio exceeds 60 weight percent, adhesiveness of undercoating film itself to the metal surface becomes inferior. Also, when the copolymerization ratio of hydroxyl group-containing acrylic monomer in said copolymer is less than 20 weight percent, coating adhesiveness becomes inferior. On the other hand, when the ratio exceeds 80 weight percent, corrosion resistance is inferior. Furthermore, when the copolymerization ratio of phenyl group-containing monomer in said copolymer is less than 5 weight percent, sliding ability and blackening resistance in boiling water are inferior. On the other hand, when said ratio exceeds 50 weight percent, water-solubility and coating adhesiveness are inferior. As used here, "blackening resistance in boiling water" refers to the resistance of surfaces (aluminum) food can, prior to coating against blackening in boiling tap water or the like for sterilization due to the reaction of the surface prior coating with metals in water.

Organic high molecular compounds or their salts containing cationic sulfur atoms in accordance with the present invention are either water-soluble, water-dispersive or emulsive resins, or their salts. Preferably, they are compounds wherein the cationic sulfur atom-containing resin has one or more than two kinds of resin skeletons derived from epoxy resin, acrylic resin, urethane resin, polybutadiene resin, polyamide resin, phenolic resin and olefine resin.

Resin skeletons described above can provide coating films on the metal surface with additional corrosion resistance.

For example, at least one of the cationic sulfur atom-containing resins or their salts has the structure represented by the chemical formula (12). 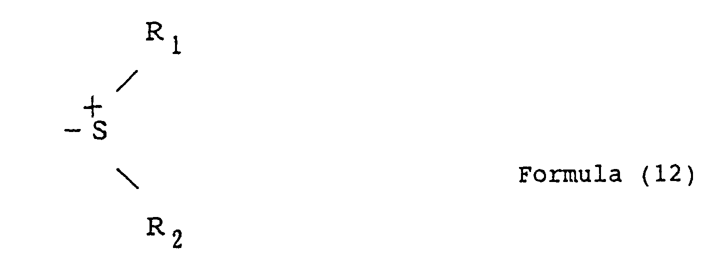 (where R₁ and R₂ = H, OH or C_{1∼15} straight or branched chain alkyl groups with possible substitutions or C_{1∼15} straight or branched chain alkanol groups with possible substitutions)

Most preferably, at least one of the sulfur atoms in the cationic sulfur atom-containing resin has any one of the following structures.

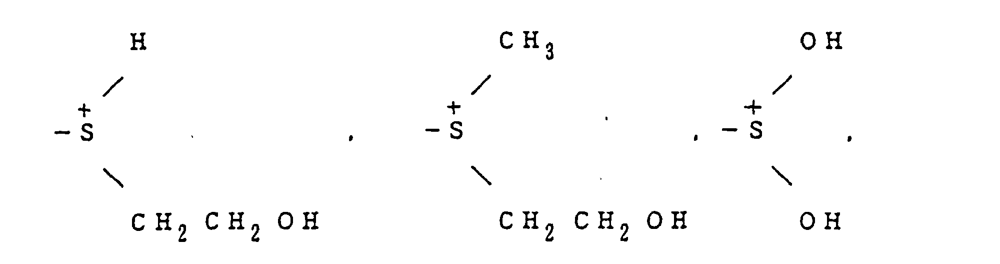

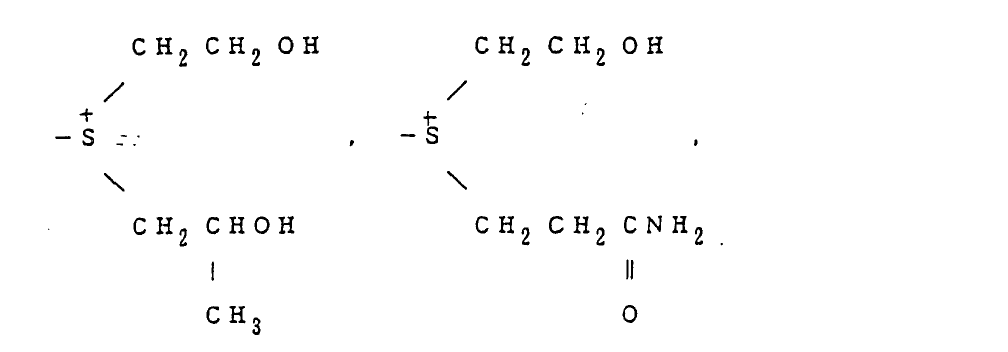

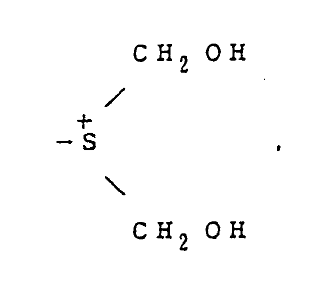

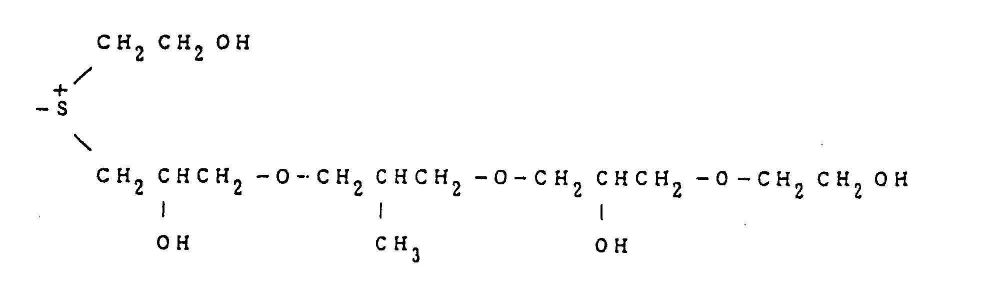

With the cationic sulfur atom-containing resin described above, the coordinating amount of resin to the metal increases, resulting in improved corrosion resistance and sliding ability.

Also, salts of the cationic sulfur atom-containing resin include those of alkali metals such as sodium, potassium, etc., alkali earth metals such as calcium, magnesium, etc., ammonium salt, etc.

In addition, the molecular weight of the cationic sulfur atom-containing resin in accordance with the present invention is 1,000∼10,000. When the molecular weight is less than 1,000, corrosion resistance and sliding ability are inferior. On the other hand, when the molecular weight exceeds 10,000, water-solubility becomes inferior.

Furthermore, the concentration of the cationic sulfur atom-containing resin and its salt in the metal surface treatment composition of the present invention is 0.01∼10 g/l, and preferably 0.1∼5 g/l. When the concentration of the cationic sulfur atom-containing resin and its salt is less than 0.01 g/l, they cannot exert their binder effects, resulting in the inferior physical durability of the undercoating film. On the other hand, when the concentration of the cationic sulfur atom-containing resin and its salt exceeds 10 g/l, the corrosion resistance becomes inferior.

The cationic sulfur atom-containing resin in accordance with the present invention contains 1∼5 phenyl groups, 1∼12 hydroxyl groups and 0.1∼7 sulfur atoms per molecular weight 500. With less than 1 phenyl group per molecular weight 500, the corrosion resistance and sliding ability are inferior. On the other hand, with phenyl groups exceeding 5 per molecular weight 500, the water-solubility and coating adhesiveness become inferior. Also, with less than 1 hydroxyl group per molecular weight 500, coating adhesiveness and water-solubility into the metal surface treatment solution become inferior. On the other hand, with more than 12 hydroxyl groups per molecular weight 500, the corrosion resistance and sliding ability are inferior. Furthermore, when the number of the cationic sulfur atoms is less than 0.1 per molecular weight 500, the coating adhesiveness and water-solubility into the metal surface treatment solution are inferior. On the other hand, when the number of the cationic sulfur atoms exceeds 7 per molecular weight 500, the corrosion resistance is inferior.

Examples of cationic sulfur atom-containing resins which meet the conditions (criteria) described above are shown in the following chemical formulae (13)∼(17). 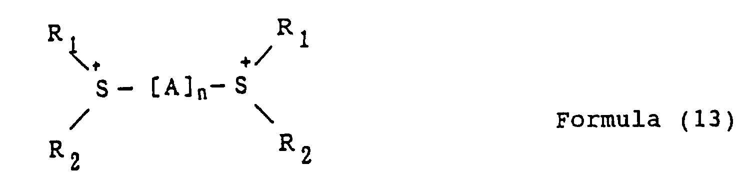 (where, 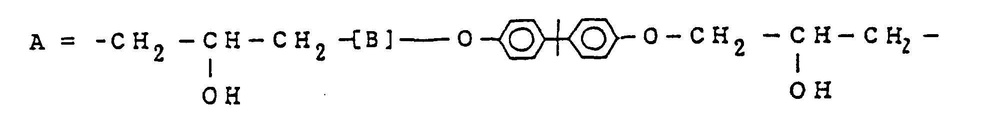 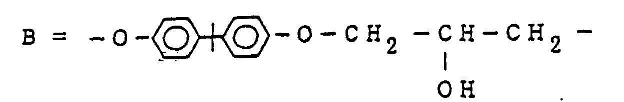 or 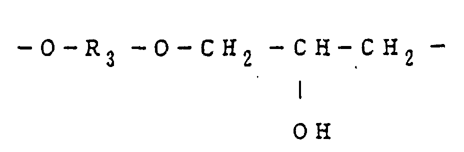 R₁ and R₂ = H, OH or C_{1∼15} straight or branched chain alkyl groups with possible substitutions, or C_{1∼15} straight or branched chain alkanol groups with possible substitutions, R₃ = C_{10∼18} straight or branched chain alkyl groups) 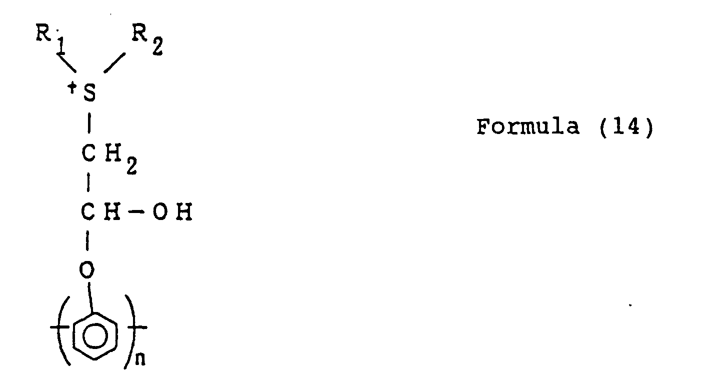 (where R₁ and R₂ = H, OH or C_{1∼15} straight or branched chain alkyl groups, or C_{1∼15} straight or branched chain alkanol groups with possible substitutions) 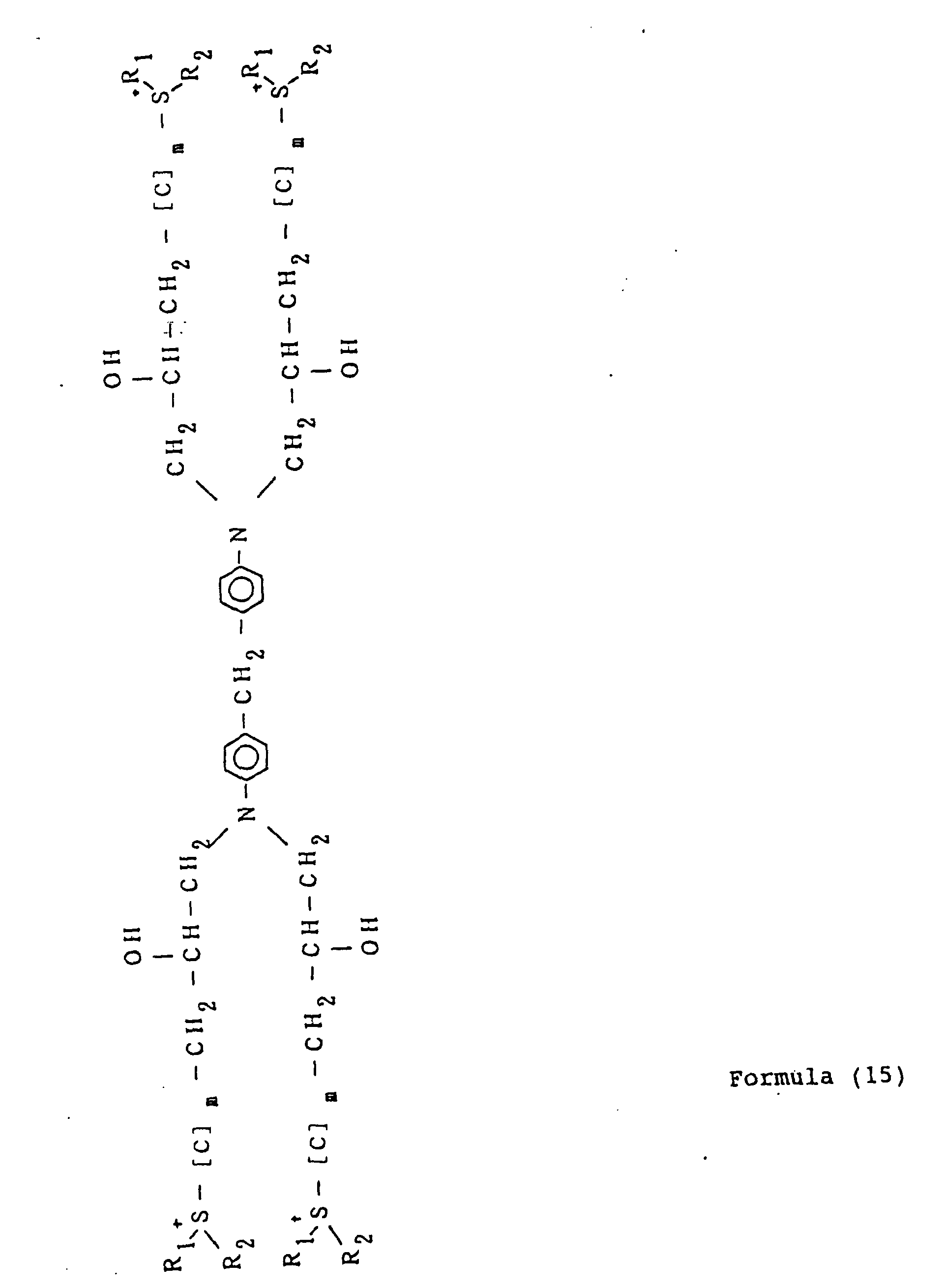 (where 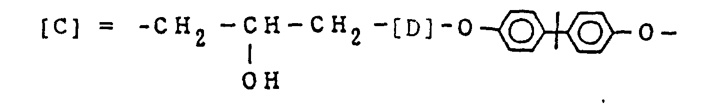 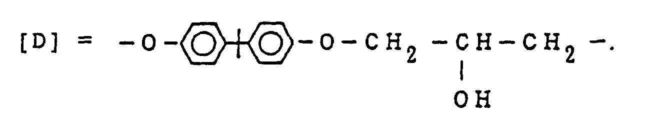 or 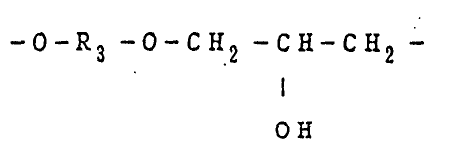
R₁ and R₂ = H, OH or C_{1∼15} straight or branched chain alkyl groups with possible substitutions or C_{1∼15} alkanol groups with possible substitutions,
R₃ = C_{10∼18} straight or branched chain alkyl groups) 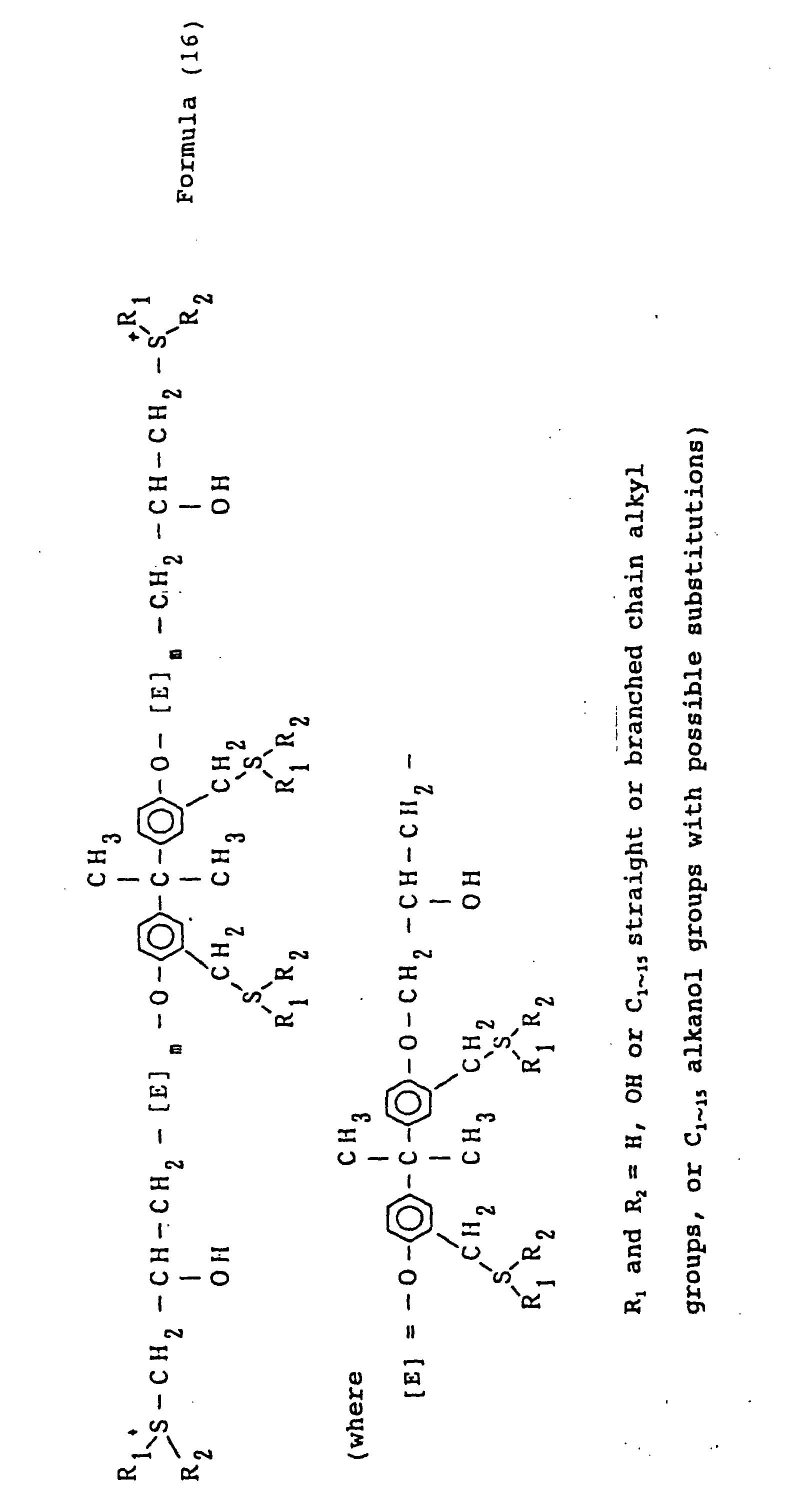 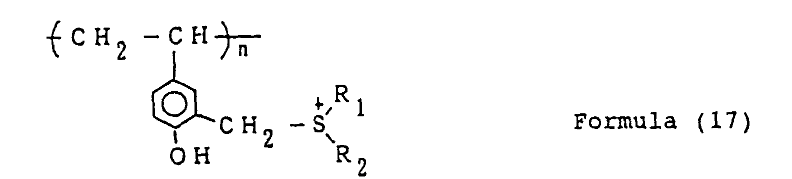
(where R₁ and R₂ = H, OH or C_{1∼15} straight or branched chain alkyl groups, or C_{1∼15} alkanol groups with possible substitutions)

The presence of hydroxyl groups in the compounds having the chemical formulae (13)∼(17) improves the coating adhesiveness of film. Also, blackening resistance in boiling water and sliding ability of films are improved, depending on the position of phenyl group in the compounds having the chemical formula (13). Furthermore, by the sulfur atom in the compound having the chemical formula (13), the adhesiveness of film to metal is improved. In addition, ionization of sulfur atom in compounds having the chemical formula 13 contributes to the stability of the treatment bath. Here, by blackening resistance in boiling water is meant blackening phenomena of surface of food cans (aluminum) prior to coating by the treatment in boiling tap water or the like for sterilization.

In the following are described nitrogen-containing organic high molecular compounds in accordance with the present invention. One example of phenolic resin consists of the repeating structuring units having the following chemical 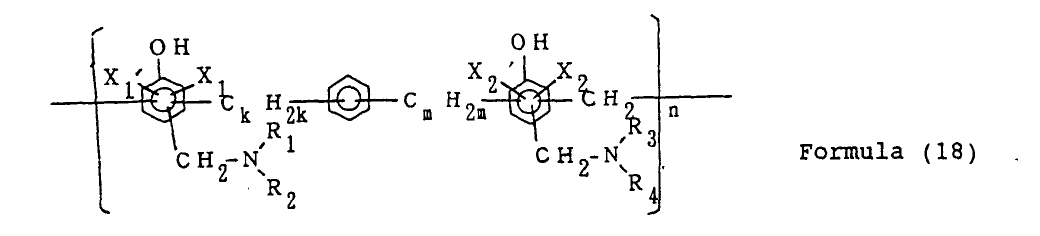 (where R₁, R₂, R₃ and R₄ = H or C_{1∼5} substituted and unsubstituted alkyl or alkanol groups;
X₁, X₁', X₂ and X₂' = H, OH or C_{1∼5} substituted and unsubstituted alkyl groups; and k and m = 1∼5; n = 1∼3)

The phenolic resin described above is obtained by reacting a phenol having the following chemical formula (19) (1 mol) with a dialkylbenzene glycol having the chemical formula (20) (0.02∼0.6 mol) and formaldehyde the amount of which is such that the sum of formaldehyde and said dialkylbenzene glycol is adjusted to be 0.7∼0.9 mol in the presence of an organic or inorganic acid as the catalyst, and further reacting the resultant phenolic condensation product with amines having the following chemical formula (21) (0.5∼2.0 mol) and the equimolar amount of formaldehyde (the aminomethylation according to Mannich reaction). 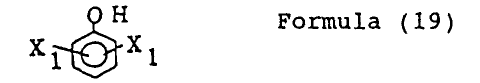 (where X₁, X₁', X₂ and X₂' = H, OH or C_{1∼5} substituted and unsubstituted alkyl groups) 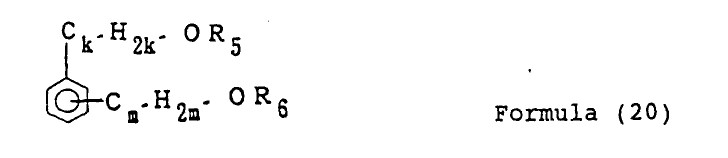 (where R₅ and R₆ = H, OH or C_{1∼5} substituted and unsubstituted alkyl groups; k' and m' = 1∼5) 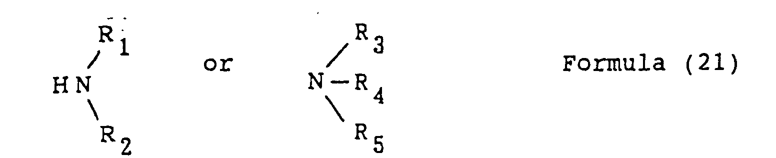 (where R₁∼R₅ = H, OH or C_{1∼10} straight or branched chain alkyl groups with possible substitutions, or C_{1∼10} straight or branched chain alkanol groups with possible substitutions)

Here, phenols are exemplified by, for example, phenol, cresol, xylenol, ethylphenol, propylphenol, butylphenol, resorcinol, pyrogallol, etc., and they may be used singly or in combination of two or more.

Also, dialkylbenzene glycols include p-xylene glycol dimethyl ether, p-xylene glycol, m-xylene glycol dimethyl ether, m-xylene glycol, o-xylene glycol dimethyl ether, o-xylene glycol, etc., and they may be used singly or in combination.

As a condensation catalyst, organic acids such as oxalic acid, p-toluenesulfonic acid, xylenesulfonic acid, phenolsulfonic acid, etc. and inorganic acids such as hydrochloric acid, sulfuric acid, etc. may be used. Amount of the catalyst to be added is in the range of 0.01∼3.0 weight percent of the sum of phenols and dialkylbenzene glycols used for the reaction.

For each 1 mol of phenols having chemical formula (19) described above, the amount of dialkylbenzene glycols is preferably 0.02∼0.6 mol, and more preferably 0.03∼0.5 mol. When the amount of dialkylbenzene glycol exceeds 0.6 mol, the solution stability, for example, of the phenolic compound thus obtained in the metal surface treatment solution is reduced. Furthermore, the phenolic compound becomes insoluble in acid, often leading to the difficulty in performing the objective metal surface treatment. On the other hand, when the amount is less than 0.02 mol, the solubility of phenolic compounds obtained becomes high, leading to the reduction of amount of resin adhering to the treated surface, and resulting in the inferior corrosion resistance and sliding ability.

Also, for each 1 mol of phenols represented by chemical formula (19) described above, the most preferable sum of dialkylbenzene glycol and formaldehyde is 0.7∼0.9 mol. When the sum of dialkylbenzene glycol and formaldehyde exceeds 0.9 mol, they are gelatinized during the polycondensation reaction. On the other hand, when the sum of dialkylbenzene glycol and formaldehyde is less than 0.7 mol, the solution viscosity (or molecular weight) of polycondensation product itself remains low to be too stable in solution, resulting in the reduced amount of resin adhering to the treated surface, and the inferior corrosion resistance and sliding ability of the treated surface.

In addition, for each 1 mol of phenols represented by chemical formula (19) described above, the amount of amines having chemical formula (21) is preferably 0.5∼2.0 mol, and more preferably 0.7∼1.5 mol. When the amount of amines exceeds 2.0 mol, the solution stability becomes too good, resulting in the reduced amount of resin adhering to the treated surface and the inferior corrosion resistance and sliding ability of the treated surface. Furthermore, there is a possibility that unreacted amines and formaldehyde will remain, which may increase the load of sewage treatment. On the other hand, when the amount of amines is less than 0.5 mol, the hydrophobicity of phenolic compounds thus obtained becomes high, often resulting in reduced solution stability. And, in some cases, the phenolic compound may become insoluble in the metal surface treatment solution to make it impossible to perform surface treatment.

Here, amines include diethanolamine, N-methylaminoethanol, ketimine, diketimine, etc., and they may be used singly, or in combination of more than two kinds of them.

Also, other phenolic resins in accordance with the present invention is exemplified by a mixture of (e) a phenolic repeating unit containing at least more than one nitrogen atom represented by the following chemical formula (22) and (f) a bisphenolic repeating unit containing at least more than one nitrogen atom represented by the following chemical formulae (23) and (24). Weight ratio of resin composed of the phenolic repeating units (e) and that of the bisphenolic repeating units (f) described above is 90:10∼10:90. 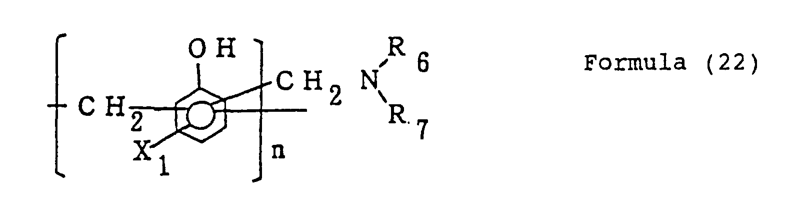 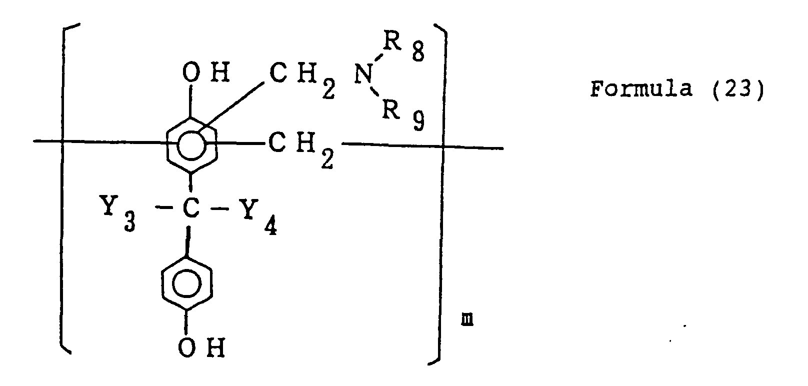 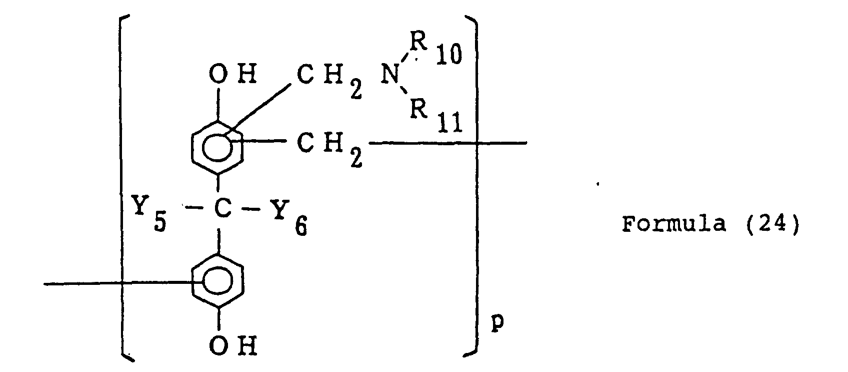 (where R₆, R₇, R₈, R₉, R₁₀, R₁₁, X₁, Y₃, Y₄, Y₅ and Y₆ = H, OH or C_{1∼10} straight or branched chain alkyl groups or C_{1∼10} straight or branched alkanol groups; m, n and p are 2∼50, respectively. These alkyl and alkanol groups may be substituted with a functional group.)

The weight ratio of resins (e) and (f) in said mixture in accordance with the present invention is 90:10∼10:90, and preferably 30:70∼70:30. When the weight ratio of resin (e) exceeds said range, the external appearance turns brown or yellow after draining and drying. On the other hand, when the ratio of resin (f) exceeds the above range, corrosion resistance becomes inferior, though browning or yellowing are prevented.

Also, the concentration of resins (e) and (f) described above in the metal surface treatment agent is 0.01∼10 g/l, and more preferably 0.1∼5 g/l. When the concentration of said mixture in the metal surface treatment agent is less than 0.01 g/l, the resinous coating film on the metal surface is not formed sufficiently thick, resulting in the reduced barrier effect and the inferior corrosion resistance and sliding ability. On the other hand, when the concentration exceeds 10 g/l, the resinous coating film becomes unnecessarily thick, resulting in the poor external appearance of the surface, as well as becoming expensive and less economical.

Furthermore, the phenolic resin of the present invention contains a copolymer composed of a phenolic compound (g) represented by the following chemical formula (25), a bisphenolic compound (h) represented by the following formula (26) and formaldehyde, and a phenol-bisphenol-formaldehyde copolymer or its salt linked with at least one kind of functional group represented by the following chemical formulae (27) and (28), wherein the molar ratio of the phenolic compound (g) and bisphenolic compound (h) described above is 9:1∼1:9. 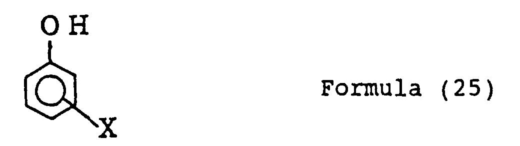 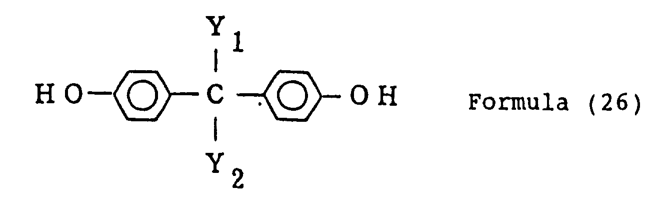 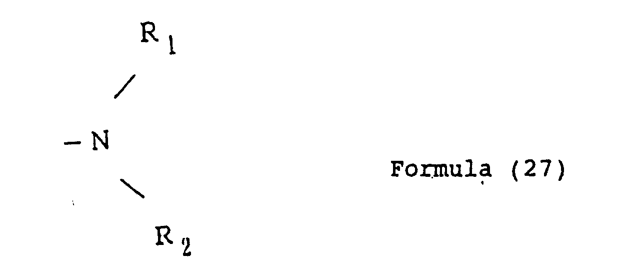 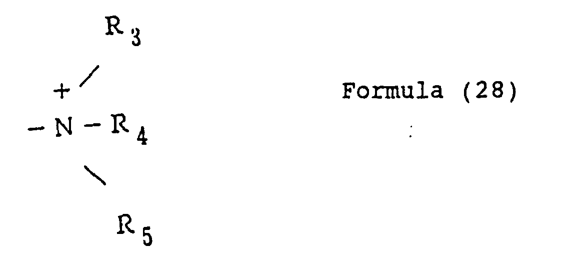 (where R₁, R₂, R₃, R₄, R₅, X, Y₁ and Y₂ = H, OH or C_{1∼10} straight or branched chain alkyl groups, or C_{1∼10} straight or branched chain alkanol groups. These alkyl or alkanol groups may be substituted with a functional group.)

The molar ratio of compounds (g) and (h) described above is 9:1∼1:9, and preferably 3:7∼7:3. When the molar ratio of compound (g) exceeds the above range, the external appearance turns brown or yellow after draining and drying. On the other hand, when the molar ratio of compound (h) becomes greater than the above range, corrosion resistance becomes inferior, though browning or yellowing are still prevented.

Also, the concentration of the above described copolymer in the metal surface treatment agent is 0.01∼10 g/l, and preferably 0.1∼5 g.

When the concentration of said copolymer in the metal surface treatment agent is less than 0.01 g/l, the thickness of resin coating film on the metal surface becomes insufficient and barrier effects are reduced, resulting in the inferior corrosion resistance and sliding ability. On the other hand, when the concentration exceeds 10 g/l, the resin coating film on the metal surface becomes unnecessarily thick, not only resulting in poor external appearance but also increasing costs and lowering economy.

As described above, by using the surface treatment agent containing phenolic resin, the sliding ability is superior, but the external appearance turns brown or yellow after draining and drying. On the other hand, the surface treatment agent containing bisphenolic resin has a problem that the corrosion resistance is inferior using this agent, although browning or yellowing after draining and drying are prevented.

The metal surface treatment agent of the present invention contains both phenolic and bisphenolic resins in a predetermined ratio, and is capable of forming a resinous coating film consisting of both resins which mutually compensate respective defects on the metal surface. Therefore, this agent is able to prevent surface browning or yellowing after draining and drying, and to improve sliding ability. Accordingly, the improved sliding ability leads to the prevention of jamming occurrence, and furthermore provides the sliding ability in the coil-coating. Also, since this agent can prevent turning the external appearance of coating film to brown or yellow, there is no possibility to cause any troubles in the succeeding process such as coating.

The metal surface treatment agent in accordance with the present invention may contain heavy metals. One or more of the following heavy metals may be contained: zirconium (Zr), titanium (Ti), molybdenum (Mo), tungsten (W), niobium (Nb), nickel (Ni), cobalt (Co), manganese (Mn), or tantalum (Ta), but preferable metals are zirconium (Zr), titanium (Ti), niobium (Nb), manganese (Mn), or tantalum (Ta). A supply source of these heavy metals is preferably their fluoride complex, or can also be their nitrate, phosphate, or the like.

The concentration of fluoride complex of heavy metal in the metal surface treatment agent in accordance with the present invention is 0.01∼10 g/l. When the concentration is less than 0.01 g/l, the corrosion resistance becomes inferior. On the other hand, when the concentration of fluoride complex of heavy metals exceeds 10 g/l, the corrosion resistance also becomes inferior.

Other metal surface treatment agents in accordance with the present invention contain an organic high molecular compound or its salt having more than one nitrogen atom or cationic sulfur atom and in a water-soluble, water-dispersive or emulsive form and also an oxidizing agent.

### Organic high molecular compound

The content of said organic high molecular compounds in the metal surface treatment agent is 0.01∼10 g/l, and preferably 0.1∼5 g/l. When the content of said organic high molecular compound is less than 0.01 g/l, a sufficiently thick organic resinous coating film is not formed, resulting in the decrease in corrosion resistance due to the reduced barrier effect. On the other hand, when the organic high molecular compound content exceeds 10 g/l, the stability of the surface treatment solution is reduced because of the presence of said organic high molecular compound in excess in the treatment solution. Accordingly, the solution is expensive and uneconomical.

### Oxidizing agent

As the oxidizing agent is effective in promoting the chemical stabilization of metal surface and the refinement and homogeneity of resinous coating film, it improves corrosion resistance. The oxidizing agent is selected from a group including hydrogen peroxide, nitrous acid, nitrite, perboric acid, perborate, chloric acid, chlorate, bromic acid, and bromate, and is preferably hydrogen peroxide and nitrite. The content of oxidizing agent in the metal surface treatment agent is 0.01∼10 g/l, and preferably 0.1∼2 g/l. When the content of the oxidizing agent is less than 0.01 g/l, the effect as oxidizing agent is not exerted, and the corrosion resistance is inferior. On the other hand, when the content of oxidizing agent exceeds 10 g/l, effect as oxidizing agent is reduced and it becomes uneconomical.

Also, the metal surface treatment agent of the present invention described above may further contain inorganic acid or heavy metal.

### Inorganic acid

Inorganic acid may include phosphoric acid, nitric acid, or the like, with phosphoric acid being most preferable. Salt of these acids is preferably that of sodium, potassium, magnesium, etc. The concentration of phosphoric acid in the metal surface treatment agent is 0.01∼10 g/l, and more preferably 0.25∼5 g/l. When the concentration is less than 0.01 g/l, acidity becomes insufficient and the organic high molecular compound described above becomes less soluble. On the other hand, when the concentration exceeds 10 g/l, resin precipitability is suppressed at the time of surface treatment and corrosion resistance becomes inferior.

### Heavy metal

One or more of Nb, Ni, Co, Mn, Ti, Ta, Mo, or W, one or more than two kinds of them may be selected and combined. Fluoride complex of heavy metals described above is preferred, and nitrate and phosphate are also included. The content of heavy metal in the metal surface treatment agent is less than 10 g/l. When the content of heavy metal exceeds 10 g/l, corrosion resistance, coating adhesiveness, and sliding ability are reduced.

Furthermore, the metal surface treatment agent in accordance with the present invention may contain water-soluble, water-dispersive, or emulsive organic high molecular compound described above, as well as phosphate ion and aluminum ion.

The content of organic high molecular compound as described above in the metal surface treatment agent is 0.01∼10 g/l, and preferably 0.1∼5 g/l. When the content of said organic high molecular compound is less than 0.01 g/l, the organic resinous coating film is not sufficiently thick, resulting in reduced barrier effect and decreased corrosion resistance. On the other hand, when the content of said organic high molecular compound exceeds 10 g/l, the organic resinous coating film becomes unnecessarily too thick, generating interference color on the treated material after the treatment, resulting in poor external appearance. Also the presence of said organic high molecular compound in excess in the treating bath reduces the stability of the surface treating bath, and the treatment becomes expensive and uneconomical.

### Phosphate ions

A supply source of phosphate ions may be phosphoric acid or phosphate. The phosphate is preferably that of sodium, potassium, magnesium, or the like. Phosphate ions are used to acidify the aqueous solution, solubilize organic high molecular compounds described above, or etch the metal surface. The concentration of phosphate ions in the metal surface treatment agent is preferably 0.01∼0.8 g /l. When the concentration of phosphoric acid is less than 0.01 g/l, etching is not only insufficient, but acidity also becomes insufficient, and the organic high molecular compounds described above become less soluble. Accordingly, the organic coating film is insufficiently precipitated on the metal surface, leading to inferior in corrosion resistance. On the other hand, when the concentration exceeds 0.8 g/l, the etching effect is not only saturated to an uneconomical extent, but also the phosphate ions increase the load for sewage treatment.

### Aluminum ions

Aluminum ions are effective in accelerating the precipitation rate of resinous coating film (that is, coating film containing organic high molecular compounds), and promoting the refining and homogeneity of the coating film. A supply source of aluminum ions is aluminum nitrate, aluminum hydroxide and aluminum fluoride, and when the metal for surface treatment is aluminum alloy, aluminum ions eluted by etching process may be usable. The concentration of aluminum ions in the metal surface treatment agent is 0.01 g/l∼0.5 g/l, and preferably 0.05 g/l∼0.2 g/l. When the concentration of aluminum ions is less than 0.01 g/l, the organic high molecular compound described above is less readily precipitated to the metal surface, which resultingly has inferior corrosion resistance. On the other hand, when the concentration of aluminum ions exceeds 0.5 g/l, aluminum ions form insoluble materials with the organic high molecular compounds described above in the treatment solution, which becomes cloudy or produces sludge, resulting in inferior external appearance of the metal.

Also, the metal surface treatment agent in accordance with the present invention may contain water-soluble, water-dispersive or emulsive organic high molecular compounds together with polyvalent anions.

The concentration of the organic high molecular compound described above in the metal surface treatment agent is 0.01∼10 g/l, and preferably 0.1∼5 g/l. When the concentration of said organic high molecular compound is less than 0.01 g/l, the organic resinous coating film is not formed sufficiently thick and is inferior in the barrier effect, resulting in the inferior corrosion resistance of the coating film. On the other hand, when the concentration of said organic high molecular compound exceeds 10 g/l, the organic resinous coating film is not only formed unnecessarily thick, but also generates interference color in the treated material after surface treatment, resulting in the inferior external appearance. Also, the unavoidable presence of said organic high molecular compound in excess in the treating bath not only reduces the stability of the surface treating bath, but also makes the process cost-expensive and uneconomical.

### Polyvalent anions

Polyvalent anions are exemplified by condensed phosphoric acid (pyrophosphoric acid, metaphosphoric acid, hexametaphosphoric acid, tripolyphosphoric acid, tetraphosphoric acid, etc.)., molybdic acid, tungstic acid, vanadic acid, phosphomolybdic acid, phosphotungstic acid, silicotungstic acid, etc. and their salts. The concentration of polyvalent anions in the metal surface treatment agent is 0.003 g/1∼10.0 g/l, and preferably 0.01 g/1∼2 g/l.

When the concentration of polyvalent anions is less than 0.003 g/l, etching of the metal surface becomes insufficient, and the resinous coating film is less readily precipitated to the metal surface, resulting in inferior corrosion resistance and sliding ability. On the other hand, when the concentration of polyvalent anions exceeds 10 g/l, the stability of the treatment solution, as well as the corrosion resistance and sliding ability are reduced. Here, treatment solution refers to the metal surface treatment agent in accordance with the present invention or that appropriately diluted with water.

Also, the metal surface treatment agent in accordance with the present invention may contain the following etchant and etchant supplement, if necessary.

### Etchant

Etchant is exemplified by hydrofluoric acid and its salt. The concentration of the etchant in the metal surface treatment agent is 0.005 g/1∼5 g/l. When the concentration of fluoride ions is less than 0.005 g/l, not only etching of the metal surface is reduced, but also pH elevation on the surface becomes insufficient. Accordingly, the resinous coating film is less readily precipitated to the metal surface and corrosion resistance is reduced. On the other hand, when the concentration of fluoride ions exceeds 5 g/l, etching on the metal surface is overly accelerated, and, in a similar manner as above, the resinous coating film is less readily precipitated to the metal surface, resulting in reduced corrosion resistance, as well as insufficient sliding ability.

### Etchant supplement

As the etchant supplement, silicofluoric acid, borofluoric acid and their salts may be used. The concentration of the etchant supplement in the metal surface treatment agent is 0.003 g/1∼5 g/l. When the concentration of the etchant supplement is less than 0.003 g/l, etching of the metal surface is insufficient, and the resinous coating film becomes less readily precipitated to the metal surface, resulting in inferior corrosion resistance. On the other hand, when the concentration of the etchant supplement exceeds 5 g/l, etching is accelerated too much, and, in a similar manner as above, the resinous coating film is less readily precipitated the metal surface, resulting in reduced corrosion resistance, as well as insufficient sliding ability.

The metal surface treatment method of the present invention is the method wherein the metal surface is contacted with the metal surface treatment agent, then washed with water and dried.

### Conditions and method for the treatment

The pH value of the metal surface treatment agent described above is about 2.0∼5.0, and preferably 2.5∼4.0. The pH is adjusted with NaOH, ammonia water, nitric acid, etc. Temperature for contacting the metal surface treatment agent of the present invention with metallic materials is preferably room temperature (for example, 20°C)∼90°C, and more preferably 35∼65°C. In general, the time for contacting metallic materials with the metal surface treatment agent in accordance with the present invention becomes shorter as the contacting temperature is raised.

The duration of spray coating of the metallic material is about 5 seconds ∼5 min, and more preferably 10∼60 seconds. When the immersion coating method is used, it requires a longer contacting time than the above. In addition, the metal surface may be contacted with the treatment agent by the dipping method, flow-coating method, rolling coating method, or the like.

As described above, metallic materials subjected to the conversion coating are washed with water, and dried at 150∼240 °C. When the drying temperature is below 150°C, corrosion resistance is inferior.

In the following, the precipitation mechanism of the organic high molecular compound of the present invention to the metal surface will be described. When the organic high molecular compound described above contains atomic nitrogen (derived from amine), it becomes cationic in acidic solution. By the elevation of pH on the metal surface at the time of etching, this cationic nature of the compound is nullified, resulting in the aggregation and precipitation of the organic high molecular compound on the metal surface. Furthermore, the precipitation of resin to the metal surface is also caused by chelating the lone pair electrons of this nitrogen atom with metal.

Also, metallic materials used in the metal surface treatment method of the present invention are exemplified by, in addition to aluminum and aluminum alloy used for aluminum cans, iron, zinc, zinc alloy, tin-plated steel, stainless steel, etc.

As described above, using the metal surface treatment agent in accordance with the present invention, the nitrogen atom or cationic sulfur atom in the organic high molecular compound or its salt is coordinated to the metal surface, resulting in the improvement of coating adhesiveness and corrosion resistance. Furthermore, since the organic high molecular compound or its salt is almost homogeneously distributed on the metal surface, the friction resistance can be reduced, and the sliding ability can be improved.

Therefore, by using the metal surface treatment agent in accordance with the present invention, the corrosion resistance and coating adhesiveness can be significantly improved as compared with the conventional agent, and a superior sliding ability can be provided.

Also, with the metal surface treatment composition in accordance with the present invention, jamming can be prevented in the fabrication of food cans using aluminum or its alloy, and sliding ability can be provided in the coil coating.

In addition, when the high molecular compound used in the present invention is a phenolic resin composition having the structure represented by the chemical formula (18) described above, this phenolic resin composition suppresses the hydrophilicity, resulting in the superior sliding ability of coating film. Furthermore, since the coating film contains few resinous skeletons, there is no possibility for the coating film to be colored, even though conjugated emission by phenol occurs in drying. Therefore, superior sliding ability can prevent the occurrence of jamming, and furthermore, provide sliding ability in the coil coating. Also, since the phenolic resin can prevent the discoloration of colored surface, no difficulty is expected in later processes, such as coating.

Also, according to the metal surface treatment agent and method of the present invention, by adjusting the ratio between the phenolic and bisphenolic components in the copolymer [consisting of (g) and (h)] or a mixture [consisting of (e) and (f)] described above within a specific range, browning of the external appearance of the treated object can be prevented, and, furthermore, the sliding ability, coating adhesiveness, and corrosion resistance of the surface can be improved.

In addition, according to the metal surface treatment agent and method in accordance with the present invention, by adding the oxidizing agent to the metal surface treatment agent containing the organic high molecular compound, the metal surface can be retained in a highly oxidized condition during the treatment, immobilized, and, accordingly, stabilized. Furthermore, the oxidizing agent accelerates etching rate of the metal surface in the treatment, leading to the acceleration of the pH elevation rate on the metal surface. Thus, the precipitation rate of the organic coating film is accelerated, leading to the formation of the fine organic (conversion) coating film on the metal surface. Therefore, the barrier ability (ionic permeability resistance, water permeability resistance) of the coating film is improved, resulting in the improved corrosion resistance prior to coating. Furthermore, since the coating film is mainly composed of the organic film, it has the sliding ability, and, although it contains some inorganic (metal salt) coating film which may cause the aggregate destruction, the organic coating film acts as the binder between the upper coating film and metallic material, resulting in the improved coating adhesiveness.

Also, according to the metal surface treatment agent and method in accordance with the present invention, as the organic high molecular compound contained in the metal surface treatment agent forms insoluble compound with aluminum ions, the precipitation rate of the organic coating film to the metal surface can be accelerated when aluminum ions are previously included in the metal surface treatment agent. Therefore, the organic coating film can be precipitated to the metal surface in the presence of lower concentration of phosphate ions than that in the conventional method. Furthermore, as a fine and homogeneous organic coating film can be formed on the metal surface by the presence of aluminum ions, the corrosion resistance, coating adhesiveness and sliding ability can be satisfied at the same time. In addition, since the concentration of phosphate ions can be reduced, an environment-friendly metal surface treatment agent can be provided.

In addition, according to the metal surface treatment agent and method in accordance with the present invention, the pH value for the resin precipitation can be shifted to the acidic side by supplementing the metal surface treatment agent containing organic high molecular compound with polyvalent anions. The organic high molecular compound described above is soluble in the acidic side of pH value, but aggregates and precipitates out from the aqueous solution system when the pH value shifts to the neutral range from the weak acidity. Therefore, the addition of polyvalent anions can accelerate the precipitation rate of organic coating film and increase the amount of resinous coating film derived from the organic high molecular compound described above to precipitate on the metal surface, leading to the shortening of the treating time. In addition, even with the relatively low amount of the coating film, since the fine coating film is formed on the metal surface, its corrosion resistance prior to coating (blackening resistance in boiling water in the case of aluminum DI cans) is improved. Furthermore, since the coating film is mainly organic, coating adhesiveness is improved, even though some inorganic components (metal salts) are contained that have sliding ability which may lead to aggregate destruction.

### Optimum embodiments for performing the invention

In the following, the present invention will be described with reference to actual and comparative examples.

### Actual Examples 1∼23 and Comparative Examples 1∼12

### 1. Objects to be treated

Shaped cans fabricated from aluminum alloy plate in Al-Mn series (JIS-A3004) using DI techniques, etc.

### 2. Method for evaluating the undercoating film

### a) Blackening resistance in boiling water

Objects treated with the composition in the present actual and comparative examples were submerged in boiling tap water for 30 min, and then the external appearance was evaluated according to the following scale.
Excellent: No change in external surface
Good : Surface slightly blackened
Poor : Surface blackened

### b) Sliding ability of the undercoating film

Motion frictional coefficient of objects subjected to the conversion treatment by the method of the present actual examples was determined using a "Heidon-14" tester with the load of 50 g and touching needle speed of 300 mm/min.
Excellent: Frictional coefficient less than 0.6.
Average : Frictional coefficient 0.6∼0.8.
Poor : Frictional coefficient greater than 0.8.

### c) Coating adhesiveness

Objects to be treated were coated with a paint (BASF Co., EB-70-001N 150 mg/m²/EB-69-002N 60 mg/m²) using a bar coater. The coated objects were subjected to wedge-bending. An adhesive tape ("cellotape", Nichiban Co.) was stuck to the bent portion, and then peeled off. The peeling conditions were evaluated according to the following scale.
Excellent: Width of coating film peeled off by tape less than 15 mm.
Average: Width of coating film peeled off by tape 15∼20 mm.
Poor : Width of coating film peeled off by tape greater than 20 mm.

### 3. Conditions for metal surface treatment

### Actual Example 1:

Shaped cans of Al-Mn series (JIS-A3004) were spray-degreased using an acidic degreasing agent (Surfcleaner NHC250, Nippon Pant Co., Ltd., 30 g/l) at 75°C for 60 seconds and washed with water. The cans were then subjected to a spray treatment at 50°C for 20 seconds with a treatment solution shown in Table 2, which was prepared by dissolving the water-soluble organic high molecular compound A-1 shown in Table 1 (0.2 g/l) in an aqueous solution prepared by diluting a treatment agent of zirconium phosphate series (Alsurf 440, Nippon Paint Co., Ltd.) to a concentration of 20 g/l. After the spray treatment, the cans were washed with tap water, and then dried at 190°C for 2 min. Results of the evaluation are shown in Table 3.

### Actual Examples 2∼12 and Comparative Examples 1∼4:

In actual examples 2∼12 and comparative examples 1∼4 were used metal surface, treatment compositions comprising water-soluble organic high molecular compounds (shown in Table 1) and fluoride complexes of heavy metal in the combination ratio shown in the following Table 3, and the metal surface treatment was performed with these compositions according to the actual example 1.

**Table 1**

| Water-soluble organic high molecular compound | | | |
|---|---|---|---|
| | Copolymer | Mixing ratio (weight ratio) | Molecular weight (Mw) |
| A-1 | HEA^{*1}/p-TBS^{*2}/DMAEA^{*3} | 40/30/30 | 3,000 |
| A-2 | HEMA^{*4}/St^{*5}/DMAPMA^{*6} | 60/20/20 | 2,500 |
| A-3 | HEA/MMA^{*7}/St/DMAEA | 50/10/20/20 | 4,000 |
| A-4 | HPA^{*8}/St/AAm^{*9} | 50/30/20 | 2,000 |
| A-5 | HEA/VP^{*10}/DMAEA | 60/20/20 | 3,000 |
| A-6 | HEA/EHA^{*11}/VP/DMAPMA | 40/20/15/15 | 1,500 |
| B-1 | HEA/p-TBS | 70/30 | 4,000 |

| | | | |
|---|---|---|---|
| *1: HEA hydroxyethyl acrylate | | | |
| *2: p-TBS para-t-butylstyrene | | | |
| *3: DMAEA N-dimethylaminoethyl acrylate | | | |
| *4: HEMA hydroxyethyl methacrylate | | | |
| *5: St styrene | | | |
| *6: DMAPMA N-dimethylaminopropyl methacrylamide | | | |
| *7: MMA methyl methacrylate | | | |
| *8: HPA hydroxypropyl acrylate | | | |
| *9: AAm acrylamide | | | |
| *10: VP vinyl phenol | | | |
| *11: EHA 2-ethylhexyl acrylate | | | |

**Table 2**

| | | Water-soluble organic high molecular compound | | Heavy metal compound | |
|---|---|---|---|---|---|
| | | Compound | Content (g/l) | Compound | Concentration (g/l) |
| Actual example | 1 | A-1 | 0.2 | Alsurf 440^{*1} | 20 |
| | 2 | A-2 | 0.5 | Alsurf 440 | 20 |
| | 3 | A-3 | 1 | Alsurf 440 | 20 |
| | 4 | A-4 | 0.5 | Alsurf 440 | 20 |
| | 5 | A-5 | 0.2 | Alsurf 440 | 20 |
| | 6 | A-6 | 0.2 | Alsurf 440 | 20 |
| | 7 | A-1 | 0.2 | [NH₄]₂ZrF₆ | 1 |
| | 8 | A-1 | 0.2 | [NH₄]₂TaF₆ | 1 |
| | 9 | A-1 | 0.2 | [NH₄]₂NbF₆ | 1 |
| | 10 | A-1 | 0.2 | [NH₄]₂MnF₆ | 1 |
| | 11 | A-1 | 0.01 | Alsurf 440 | 20 |
| | 12 | A-1 | 10 | Alsurf 440 | 20 |
| Comparative example | 1 | B-1 | 0.2 | Alsurf 440 | 20 |
| | 2 | A-1 | 0.2 | [NH₄]₂TiF₆ | 1 |
| | 3 | A-1 | 0.2 | [NH₄]₂ZnF₆ | 1 |
| | 4 | - | - | Alsurf 440 | 20 |

| | | | | | |
|---|---|---|---|---|---|
| *1: Alsurf 440: Treatment agent of zirconium phosphate series (Nippon Paint Co.) | | | | | |

**Table 3**

| | | Result of Evaluation | | | |
|---|---|---|---|---|---|
| | | Blackening resistance in boiling water | Sliding ability (motion frictional coefficient) | | Coating adhesiveness |
| Actual example | 1 | Excellent | Excellent | 0.49 | Excellent |
| | 2 | Excellent | Excellent | 0.48 | Excellent |
| | 3 | Excellent | Excellent | 0.47 | Excellent |
| | 4 | Excellent | Excellent | 0.48 | Excellent |
| | 5 | Excellent | Excellent | 0.45 | Excellent |
| | 6 | Excellent | Excellent | 0.46 | Excellent |
| | 7 | Excellent | Excellent | 0.48 | Excellent |
| | 8 | Excellent | Excellent | 0.49 | Excellent |
| | 9 | Excellent | Excellent | 0.48 | Excellent |
| | 10 | Excellent | Excellent | 0.48 | Excellent |
| | 11 | Excellent | Excellent | 0.49 | Excellent |
| | 12 | Excellent | Excellent | 0.49 | Excellent |
| Comparative example | 1 | Poor | Poor | 0.90< | Poor |
| | 2 | Poor | Excellent | 0.51 | Excellent |
| | 3 | Poor | Excellent | 0.52 | Excellent |
| | 4 | Excellent | Poor | 0.90< | Poor |

These results indicated that, by using the metal surface treatment composition of the present invention, all the examined characteristics, including blackening resistance in boiling water, sliding ability, and coating adhesiveness were improved as compared with the conventional composition.

### Actual Example 13:

Shaped cans of Al-Mn series (JIS-A3004) were degreased using an acidic degreasing agent (Surfcleaner NHC250, Nippon Paint Co., Ltd.); 30 g/l, 75°C, 60 seconds with a sprayer) and washed with water. Then, the cans were subjected to a spray conversion treatment at 50°C for 20 seconds with a treatment solution shown in Table 5 prepared by dissolving a water-soluble resin C-1 shown in Table 4 (0.2 g/l) in an aqueous solution which had been prepared by diluting a treatment agent of zirconium phosphate series (Alsurf 440, Nippon Paint Co., Ltd.) to a concentration of 20 g/l. After the spray treatment, the cans were washed with tap water, and then dried at 190°C for 2 min. Results of the evaluation are shown in Table 6.

### Actual Examples 14∼23 and Comparative Examples 5∼12:

In actual examples 14∼23 and comparative examples 5∼12, the metal surface treatment compositions containing water-soluble resins (shown in Table 4) and fluorides of heavy metals in composition ratios shown in the following Table 5 were used for the treatment according to Actual Example 13 described above. Results of the evaluation are shown in Table 6.

**Table 4**

| Water-soluble organic high molecular compound | | |
|---|---|---|
| | Structure | Molecular weight (Mr) |
| C-1 | Bisphenol A type epoxy resin supplemented with sulfonyl group | 1,800 |
| C-2 | Novorac type epoxy resin modified with sulfonium group | 2,500 |
| C-3 | Vinyl phenolic resin modified with sulfonium group | 4,600 |
| C-4 | Bisphenol A type epoxy resin modified with sulfonium group | 2,000 |
| D-1 | Compound represented by the chemical formula (13) | 20,000 |
| D-2 | Bisphenol A type epoxy resin ring-opened by alcohol | 460 |
| D-3 | Bisphenol A type epoxy resin modified with sulfonium group | 610 |

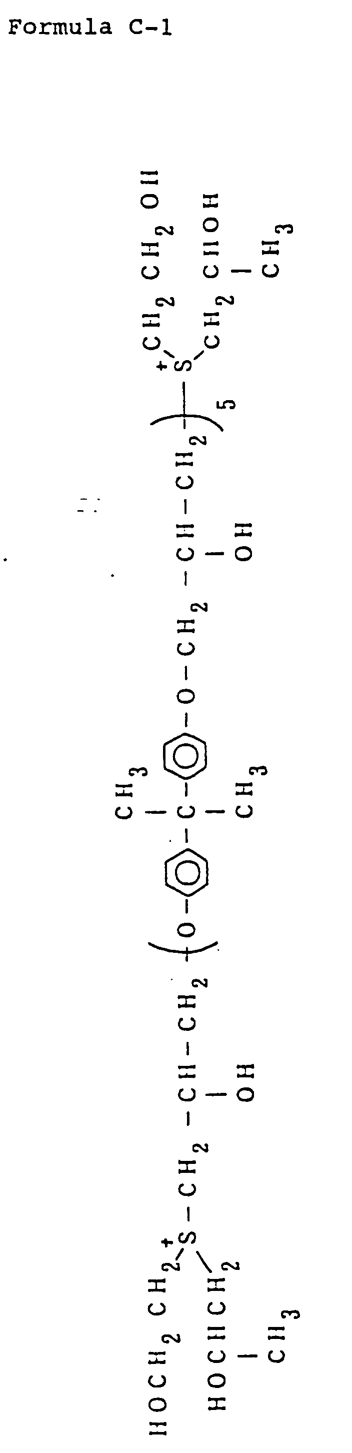

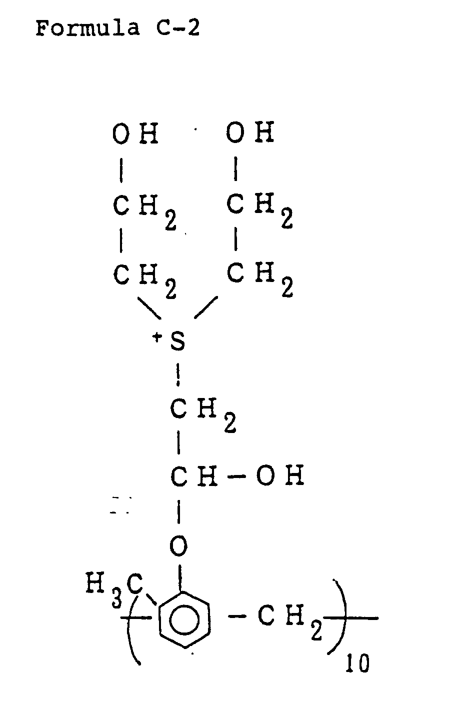

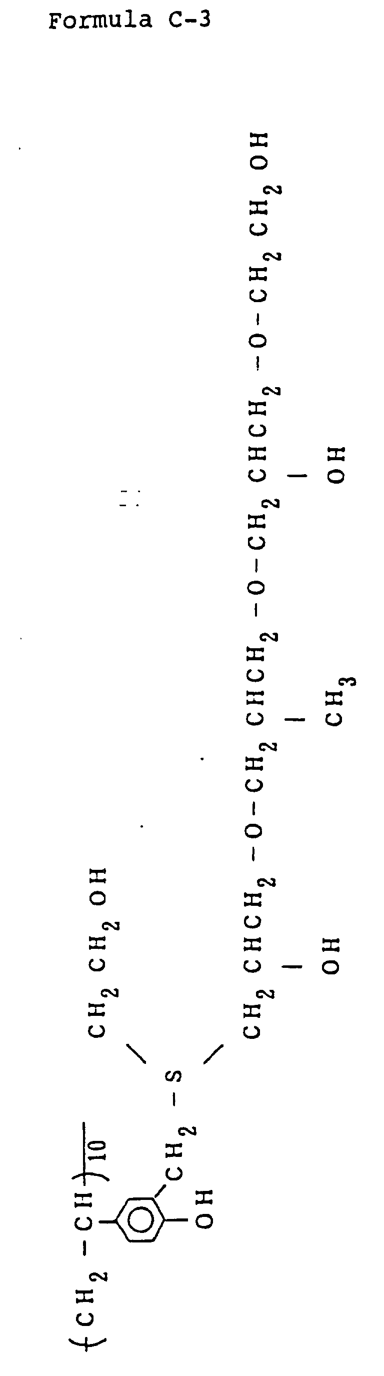

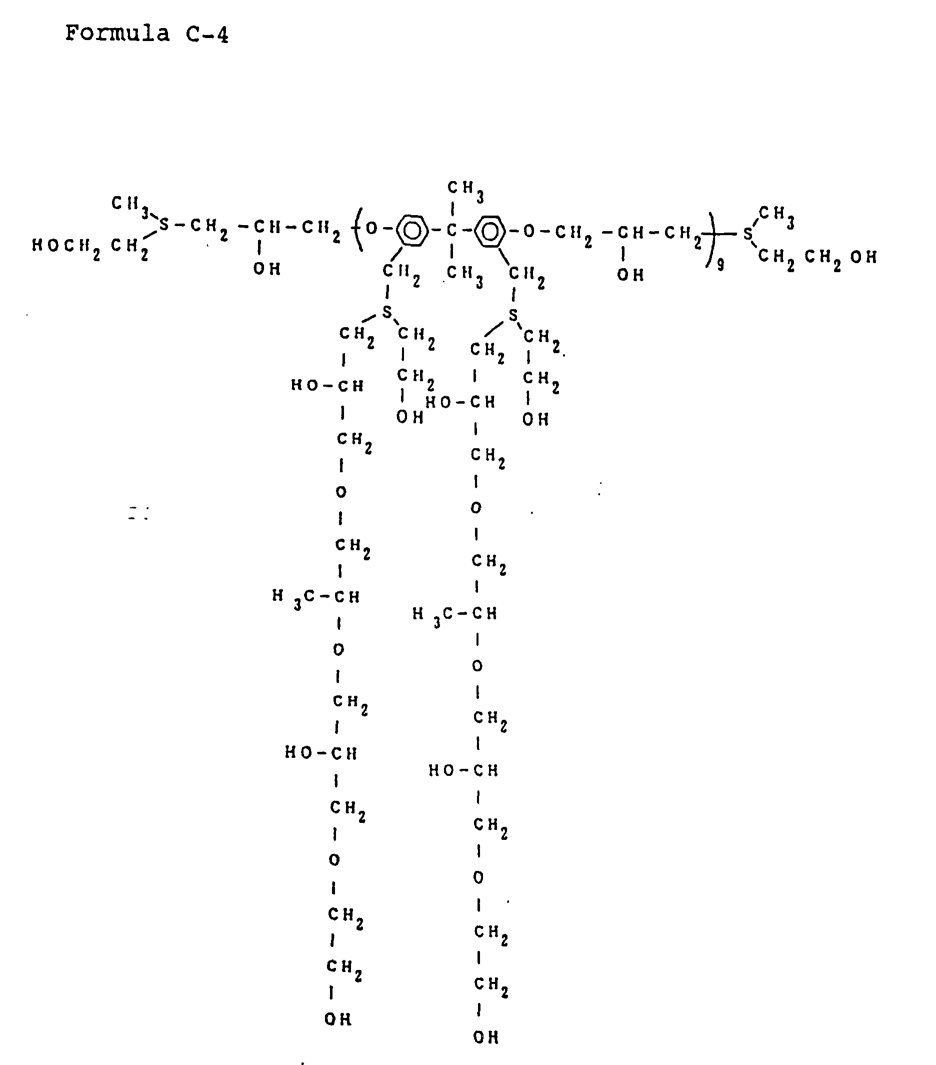

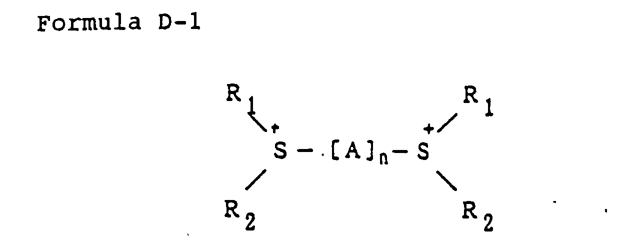

(where 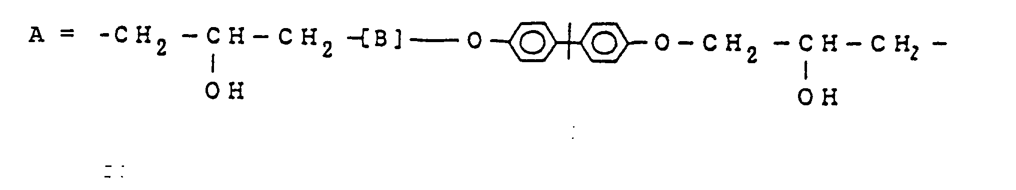 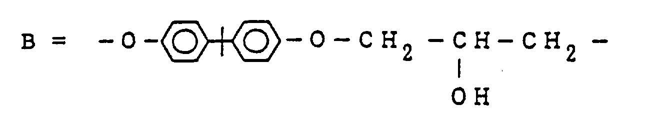 or 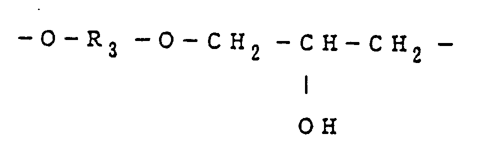
R₁ and R₂ = H, OH or C_{1∼15} straight or branched chain alkyl groups with possible substitutions, or C_{1∼15} straight or branched alkanol groups with possible substitutions
R₃ = C_{10∼18} straight or branched chain alkyl groups

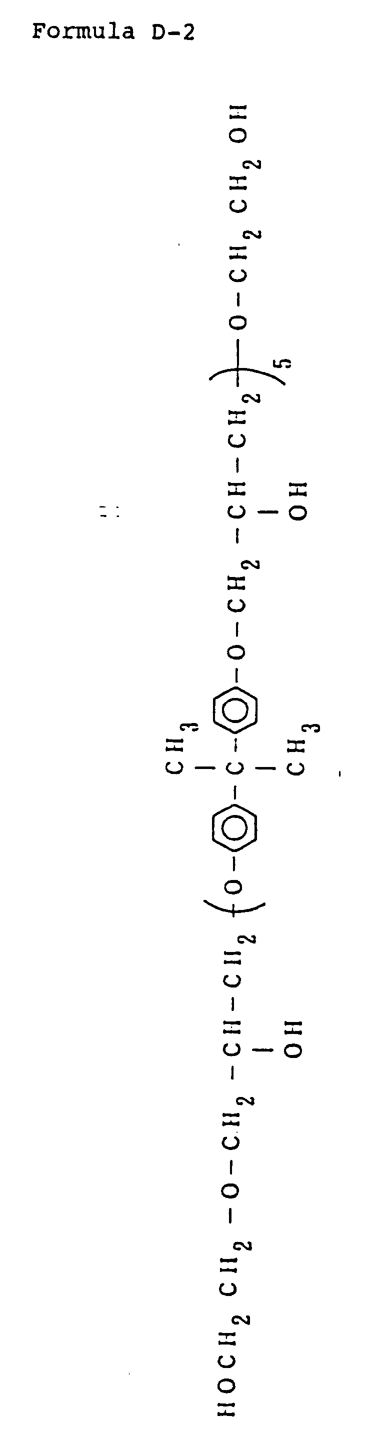

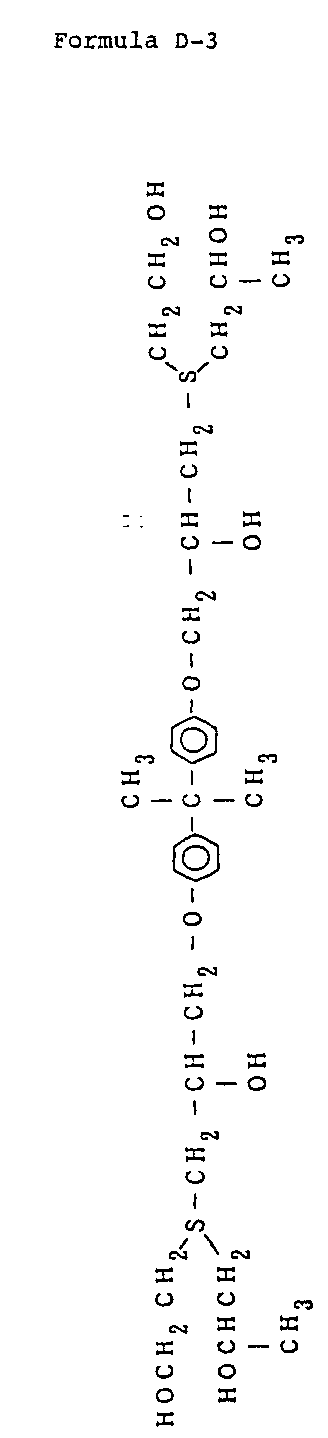

**Table 5**

| | | Cationic organic high molecular compound | | Heavy metal compound | |
|---|---|---|---|---|---|
| | | Compound | Content (g/) | Compound | Content |
| Actual example | 13 | C-1 | 0.2 | Alsurf 440^{*1} | 20 |
| | 14 | C-2 | 0.2 | Alsurf 440 | 20 |
| | 15 | C-3 | 0.2 | Alsurf 440 | 20 |
| | 16 | C-4 | 0.2 | Alsurf 440 | 20 |
| | 17 | C-1 | 0.2 | [NH₄]₂ZrF₆ | 1 |
| | 18 | C-1 | 0.2 | [NH₄]₂TaF₆ | 1 |
| | 19 | C-1 | 0.2 | [NH₄]₂NbF₆ | 1 |
| | 20 | C-1 | 0.2 | [NH₄]₂MnF₆ | 1 |
| | 21 | C-1 | 0.2 | [NH₄]₂CoF₆ | 1 |
| | 22 | C-1 | 0.01 | Alsurf 440 | 20 |
| | 23 | C-1 | 5 | Alsurf 440 | 20 |
| Comparative example | 5 | D-1 | 0.2 | Alsurf 440 | 20 |
| | 6 | D-2 | 0.2 | Alsurf 440 | 20 |
| | 7 | C-1 | 0.2 | [NH₄]₂TiF₆ | 1 |
| | 8 | C-1 | 0.2 | [NH₄]₂ZnF₆ | 1 |
| | 9 | - | - | Alsurf 440 | 20 |
| | 10 | D-3 | 0.2 | Alsurf 440 | 20 |
| | 11 | C-1 | 0.005 | Alsurf 440 | 20 |
| | 12 | C-1 | 10 | Alsurf 440 | 20 |

| | | | | | |
|---|---|---|---|---|---|
| *1: Alsurf 440 Treatment agent of zirconium phosphate series (Nippon Paint Co., Ltd.) | | | | | |

**Table 6**

| Evaluation results | | | | | |
|---|---|---|---|---|---|
| | | Blackening resistance in boiling water | Sliding (motion frictionalability coefficient) | | Coating adhesiveness |
| Actual example | 13 | Excellent | Excellent | 0.45 | Excellent |
| | 14 | Excellent | Excellent | 0.42 | Excellent |
| | 15 | Excellent | Excellent | 0.49 | Excellent |
| | 16 | Excellent | Excellent | 0.41 | Excellent |
| | 17 | Excellent | Excellent | 0.45 | Excellent |
| | 18 | Excellent | Excellent | 0.46 | Excellent |
| | 19 | Excellent | Excellent | 0.46 | Excellent |
| | 20 | Excellent | Excellent | 0.44 | Excellent |
| | 21 | Excellent | Excellent | 0.45 | Excellent |
| | 22 | Excellent | Excellent | 0.49 | Excellent |
| | 23 | Excellent | Excellent | 0.43 | Excellent |
| Comparative example | 5 | Average | Average | 0.69 | Poor |
| | 6 | Poor | Poor | 0.90< | Poor |
| | 7 | Poor | Excellent | 0.45 | Excellent |
| | 8 | Poor | Excellent | 0.45 | Excellent |
| | 9 | Excellent | Poor | 0.90< | Poor |
| | 10 | Poor | Average | 0.74 | Average |
| | 11 | Poor | Poor | 0.79 | Poor |
| | 12 | Average | Excellent | 0.42 | Excellent |

These results indicate that, by using the metal surface treatment composition of the present invention, all the examined characteristics, including blackening resistance in boiling water, sliding ability, and coating adhesiveness were improved as compared with those by using the conventional composition.

In the following, preferred embodiments wherein the high molecular compounds are phenolic resins in accordance with Claims 6, 7, and 8 will be described.

### Actual Examples 24∼33 and Comparative Examples 13∼18:

### <Preparation of polycondensation product E>

The reaction was performed with the reactants in the mixing ratio shown in Table 7. Into a reaction apparatus equipped with a stirrer, reflux condenser, and thermometer were placed m-cresol (1 mol, 108 g), m-xylene glycol dimethyl ether (0.03 mol, 5 g). There were p-toluenesulfonic acid (0.3 g). These were reacted at 160°C for 2 h. The interior temperature was reduced to 100°C, and, to the reaction mixture was added a 37% formaldehyde aqueous solution (0.75 mol, 61 g) over 1 h. The resulting mixture was refluxed at 100°C for 2 h, and then subjected to dehydration reaction at up to 140°C under normal pressure and then in vacuo. The polycondensation reaction was judged to be completed when the inside temperature elevated up to 160°C. Then, as shown in Table 8, the reaction mixture was cooled to 120°C, and added with butyl cellosolve (194 g) to dissolve the polycondensation product completely. To the resultant mixture was added pure water (194 g) below 100°C, and, when the inside temperature was reduced to 50°C, N-methylaminoethanol (1 mol, 75 g) was added. To this mixture was added a 37% formaldehyde aqueous solution (1 mol, 81.1 g) over 1 h, and the resultant mixture was reacted at 50°C for 1 h, and further at 90°C for 1.5 h. The resin solution thus obtained had the viscosity 0.11 Pa·s, contained free formaldehyde 0%, free phenol 0%, left non-volatile residue 31.2% after heating at 180°C for 1 h, and was soluble in phosphoric acid aqueous solution at pH 2.

### <Preparation of Polycondensation Products F∼H>

The reaction was performed, according to the method for preparing polycondensation product E, with reactants in the mixing ratio shown in Tables 7 and 8, and the resin solution having the general properties shown in Table 8 was obtained.

### <Preparation of Polycondensation Product I>

The reaction was performed with reactants in the mixing ratio shown in Table 7. Into a reaction apparatus equipped with stirrer, reflux condenser, and thermometer were placed phenol (1 mol, 94 g) and p-toluenesulfonic acid (0.3 g), and, after the inside temperature was raised to 100°C, a 37% formaldehyde aqueous solution (0.8 mol, 65 g) was added to the mixture over 1 h, and the resultant mixture was refluxed at 100°C for 2 h. Then, the reaction mixture was subjected to the dehydration reaction at up to 140°C under the normal pressure, then in vacuo, and the polycondensation reaction was judged to be completed when the inside temperature elevated to 160°C. Then, as shown in Table 8, the inside temperature was reduced to 120°C, and butyl cellosolve (156 g) was added to the mixture to dissolve the polycondensation product completely. Pure water (156 g) was added to the mixture below 100°C, and when the inside temperature was lowered to 50°C, N-methylaminoethanol (1 mol, 75 g) was added. To this mixture was added a 37% formaldehyde aqueous solution (1 mol, 81.1 g) over 1 h, and the resultant mixture was reacted at 50°C for 1 h, and further at 90°C for 3.5 h. The resin solution thus obtained had viscosity 0.12 Pa·s, contained free formaldehyde 0%, free phenol 0%, left non-volatile fraction 31.2% after heating at 180°C for 1 h, and was soluble in phosphoric acid ate aqueous solution at pH 2.

### Preparation of Polycondensation Products J and K:

The reaction was performed according to the method for preparing the polycondensation product E with reactants in the mixing ratio shown in Tables 7 and 8, and a resin solution having the general properties shown in Table 8 was obtained.

### Preparation of Polycondensation Product L:

The reaction was performed with reactants in the mixing ratio shown in Table 7. Into a reaction apparatus equipped with stirrer, reflux condenser, and thermometer were placed butyl cellosolve (200 g) and polyvinylphenol [molecular weight in weight average (Mr) = 3,000] (1 mol, 120 g, the repeating phenolic unit taken as 1 mole of the phenolic resin), and the mixture was stirred for 1 h as the inside temperature raised up to 110°C to dissolve the polyvinylphenol completely. When the inside temperature was reduced to 100°C, diethanolamine (1 mol, 105 g) was added, and the mixture was reacted at 50°C for 1 h, then at 90°C for 3 h. The resin solution thus obtained had a viscosity 0.12 Pa·s, free formaldehyde 0.7%, free phenol 0%, and left the non-volatile fraction 30.3% after heating at 180°C for 1 h, and was soluble in phosphoric acid aqueous solution at pH 2.

**Table 7**

| Polycondensation reaction | | | Polycondensation product | | | | Polycondensation product | | | |
|---|---|---|---|---|---|---|---|---|---|---|
| | | | E | F | G | H | I | J | K | L |
| Mixing ratio Weight (mol) | Phenol | Phenol | - | 94(1.0) | 94(1.0) | - | 94(1.0) | 94(1.0) | 94(1.0) | - |
| | | m-Cresol m-Cresol | 108(1.0) | - | - | - | - | - | - | - |
| | | 3,5-Xylenol | - | - | - | 122(1.0) | | | | |
| | | Polyvinylphen ol | - | - | - | - | - | - | - | 120(1.0) |
| | Xylene glycol *1 | PXDM | - | 10(0.06) | 40(0.24) | - | - | 40(0.24) | 40(0.24) | - |
| | | OXDM | - | - | - | 83(0.5) | - | - | - | - |
| | | MXDM | 5(0.03) | - | - | - | - | - | - | - |
| | Catalyst | p-Toluenesulfonic acid | 0.3 | 0.3 | 0.3 | - | 0.3 | 0.3 | - | - |
| | | Phenolsulfonic acid | - | - | - | 0.3 | - | - | 0.3 | - |
| | 37% formaline | *2 | 61(0.75) | 57(0.7) | 41(0.5) | 16(0.2) | 65(0.8) | 41(0.5) | 41(0.5) | - |
| Reaction time (h) | Primary reaction | 160°C(h) | 2 | 2 | 3 | 3 | | 3 | 3 | - |
| | Secondary reaction | 100°C (h) | 1 | 1 | 1 | 0.5 | 1.5 | 1 | 1 | - |

| | | | | | | | | | | |
|---|---|---|---|---|---|---|---|---|---|---|
| *1 PXDM: p-xylene glycol dimethyl ether OXDM: o-xylene glycol dimethyl ether MXDM: m-xylene glycol dimethyl ether | | | | | | | | | | |
| *2 Figures in parentheses represent the molar amount of formaldehyde. | | | | | | | | | | |

**Table 8**

| Aminomethylation reaction | | | Polycondensation product | | | | Polycondensation product | | | |
|---|---|---|---|---|---|---|---|---|---|---|
| | | | E | F | G | H | I | J | K | L |
| Mixing ratio Weight (mol) | Solvent | Ethyl cellosolve | - | - | - | 247 | - | 197 | - | - |
| | | Butyl cellosolve | 194 | 173 | 197 | - | 172 | - | 360 | 200 |
| | | Pure water | 183 | 149 | 170 | 230 | 161 | 193 | 335 | 189 |
| | Amine | N-Methylaminoethanol | 75(1.0) | 60(0.8) | 113(1.5) | - | 75(1.0) | - | - | - |
| | | Diethanolamine | - | - | - | 158(1.5) | - | 42(0.4) | 231(2.2) | 75(1.0) |
| | 37% formalin | *1 | 81(1.0) | 65(0.8) | 122(1.5) | 122(1.5) | 81(1.0) | 32(0.4) | 178(2.2) | 82(1.0) |
| Reaction time (h) | Tertiary reaction | 50°C (h) | 1 | 1 | 1 | 1 | 1 | 1 | 1 | 1 |
| | Quaternary reaction | 90°C (h) | 1.5 | 1.5 | 2. | 4 | 3.5 | 3 | 4.5 | 3 |
| General property (unit) | External appearance | | Reddish brown liquid | Reddish brown liquid | Reddish brown liquid | Reddish brown liquid | Reddish brown liquid | Reddish brown liquid | Reddish brown liquid | Reddish brown liquid |
| | Viscosity | (Pa·s) | 0.11 | 0.13 | 0.09 | 0.15 | 0.12 | 0.09 | 0.18 | 0.12 |
| | Free formaldehyde | (%) | 0 | 0 | 0 | 0 | 0.6 | 0 | 1.1 | 0.7 |
| | Free phenol | (%) | 0 | 0 | 0 | 0 | 0.2 | 0.6 | 0 | 0 |
| | Non-volatile fraction | (%) | 31.2 | 30.0 | 33.0 | 34.6 | 31.2 | 28.2 | 30.1 | 30.3 |
| | Acid solubility | *2 | Excellent | Excellent | Excellent | Excellent | Excellent | Poor | Excellent | Excellent |

| | | | | | | | | | | |
|---|---|---|---|---|---|---|---|---|---|---|
| *1: Figures in parentheses represent the molar amount of formaldehyde. | | | | | | | | | | |
| *2: Solubility of resin which is added to phosphoric acid aqueous solution at pH 2 such that the concentration of non-volatile fraction is adjusted to be 0.2 weight percent. | | | | | | | | | | |

### 1. Objects to be treated

Cans fabricated by shaping an aluminum alloy plate of Al-Mn series (JIS-A3004) using DI techniques.

### 2. Method for evaluating the undercoating film

### a) Blackening resistance in boiling water

Cans which had been treated with the agent of the present actual and comparative examples were immersed in boiling tap water for 30 min, and their external appearance was evaluated according to the following scale.
Excellent: No change in external appearance.
Average: External surface slightly blackened.
Poor: External surface blackened.

### b) Sliding ability of the undercoating film

Motion frictional coefficient of the surface of cans treated by the method of the present actual example was determined using a Heidon-14 tester with a load of 50 g and a touching needle speed of 300 mm/min.
Excellent : Motion frictional coefficient less than 0.7.
Average : Motion frictional coefficient 0.7∼0.8.
Poor : Motion frictional coefficient greater than 0.8.

### c) Coating adhesiveness

Treated cans were painted with paint (BE-70-001N 150 mg/m²/EB-69-002N 60 mg/m²; BASF Co.) using a bar coater. Cans thus painted were subjected to wedge-bending, and an adhesive tape (Nichiban cellotape) was stuck onto the bent portion, and then peeled off. The peeling conditions were evaluated according to the following scale.
Excellent : Length of coating film peeled off with tape less than 15 mm.
Average : Length of coating film peeled off with tape 15∼20 mm.
Poor : Length of coating film peeled off with tape greater than 20 mm.

### d) Preserbility of treated external appearance

### (stainability)

The external appearance of cans, which had been subjected to conversion coating treatment and dried at 210°C for 3 min, was observed with the naked eye and evaluated.
Excellent : No stain
Poor : Stained

### e) Stability of the treatment solution

The conditions of the freshly prepared treatment solution were observed with the naked eye.
Excellent : No white cloudiness
Average : White cloudy
Poor : Precipitates and aggregates are present.

### f) Possibility of water pollution

Possibility of water pollution was evaluated with the total percent of free phenol and formaldehyde contained in the resinous solution.
Excellent : Total percent is less than 0.5%.
Average : Total percent is 0.5∼5%.
Poor : Total percent exceeds 5%.

### 3. Conditions for treatment

Shaped cans of Al-Mn series (JIS-A3004) were spray-degreaseed using an acidic degreasing agent (Surfcleaner NHC250, Nippon Paint Co., Ltd.; 30 g/l) at 75°C for 60 seconds, washed with water. Then, the cans were subjected to spray conversion treatment at 50°C for 20 seconds with a surface treatment agent having a composition shown in Table 9 at pH 3.5, washed with water, and dried at 190°C for 2 min. Results of the evaluation are shown in Table 10.

**Table 9**

| | | Composition of metal surface treatment agent | | | | | | |
|---|---|---|---|---|---|---|---|---|
| | | Polycondensation product (g/l) | Phosphoric acid (g/l) | Hydrofluoric acid (g/l) | Hydrogen peroxide (g/l) | Tripolyphosphoric acid (g/l) | Silicofluoric acid (g/l) | Zircofluoric acid (g/l) |
| Actual example | 24 | E 1.0 | 0.5 | 0.5 | - | - | - | - |
| | 25 | F 1.0 | 0.5 | 0.5 | - | - | - | - |
| | 26 | G 1.0 | 0.5 | 0.5 | - | - | - | - |
| | 27 | H 1.0 | 0.5 | 0.5 | - | - | - | - |
| | 28 | E 1.0 | 0.5 | 0.5 | 0.1 | - | - | - |
| | 29 | E 1.0 | 0.5 | 0.5 | 0.1 | 0.1 | - | - |
| | 30 | E 1.0 | 0.5 | 0.5 | - | - | 0.01 | - |
| | 31 | E 9 | 5 | - | - | - | - | - |
| | 32 | E 0.05 | 0.1 | 0.1 | - | - | - | - |
| | 33 | E 0.2 | 0.03 | - | - | - | - | 0.03 |
| Comparative example | 13 | I 1.0 | 0.5 | 0.5 | - | - | - | - |
| | 14 | J 1.0 | 0.5 | 0.5 | - | - | - | - |
| | 15 | K 1.0 | 0.5 | 0.5 | - | - | - | - |
| | 16 | L 1.0 | 0.5 | 0.5 | - | - | - | - |
| | 17 | E 0.001 | 0.5 | 0.5 | - | - | - | - |
| | 18 | E 1.0 | 30 | - | - | - | - | - |

**Table 10**

| | | Evaluation | | | | | |
|---|---|---|---|---|---|---|---|
| | | Blackening resistance | Sliding ability | Coating adhesiveness | Maintenance of external appearance (stainability) | Stability of treatment solution | Water pollution |
| Actual example | 24 | Excellent | Excellent | Excellent | Excellent | Excellent | Excellent |
| | 25 | Excellent | Excellent | Excellent | Excellent | Excellent | Excellent |
| | 26 | Excellent | Excellent | Excellent | Excellent | Excellent | Excellent |
| | 27 | Excellent | Excellent | Excellent | Excellent | Excellent | Excellent |
| | 28 | Excellent | Excellent | Excellent | Excellent | Excellent | Excellent |
| | 29 | Excellent | Excellent | Excellent | Excellent | Excellent | Excellent |
| | 30 | Excellent | Excellent | Excellent | Excellent | Excellent | Excellent |
| | 31 | Excellent | Excellent | Excellent | Excellent | Excellent | Excellent |
| | 32 | Excellent | Excellent | Excellent | Excellent | Excellent | Excellent |
| | 33 | Excellent | Excellent | Excellent | Excellent | Excellent | Excellent |
| Comparative example | 13 | Average | Poor | Excellent | Poor | Excellent | Average |
| | 14 | - | - | - | - | Poor | Average |
| | 15 | Excellent | Excellent | Excellent | Excellent | Excellent | Average |
| | 16 | Average | Poor | Average | Average | Excellent | Average |
| | 17 | Poor | Poor | Poor | Excellent | Excellent | Excellent |
| | 18 | Poor | Excellent | Poor | Poor | Poor | Poor |

These results indicate that, using the agent and method of the metal surface treatment of the present invention, all the characteristics, including corrosion resistance (blackening resistance in boiling water, and retorting resistance), . sliding ability, and coating adhesiveness, of the metallic materials were much improved as compared with those treated with the conventional agents and methods.

In the following, preferred embodiments wherein high molecular compounds used in the present invention are phenolic resins according to Claims 9 and 10 will be described.

### Actual Examples 34∼41 and Comparative Examples 19∼22:

### 1. Objects to be treated

Cans fabricated by shaping an aluminum alloy plate of Al-Mn series (JIS-A3004) using DI techniques, etc.

### 2. Method for evaluating the undercoating film

### a) Blackening resistance in boiling water (corrosion resistance)

Cans which had been surface-treated with the composition of the present actual and comparative examples were immersed in boiling water for 30 min, and their external appearance was evaluated according to the following scale.
Excellent : No change in external appearance
Average : External surface slightly blackened.
Poor : External surface blackened.

### b) Sliding ability of the undercoating film surface

The motion frictional coefficient of cans surface-treated by the method of the present actual example was determined using a Heidon-14 tester with 5 mmφ steel ball, a load of 50 g and a touching needle speed of 300 mm/min.
Excellent : Motion frictional coefficient less than 0.5.
Average : Motion frictional coefficient 0.55∼0.8.
Poor : Motion frictional coefficient greater than 0.8.

### c) Coating adhesiveness

Surface-treated cans were painted with paint [EB-70-001N 150 mg/m²; Clear, EB-69-002N 60 mg/m² (BASF Co.)] using a bar coater. Cans thus painted were subjected to wedge-bending, and an adhesive tape (Nichiban cellotape) was stuck onto the bent portion, then peeled off. Peeling conditions were evaluated according to the following scale.
Excellent : Length of coating film peeled off with tape less than 15 mm.
Average : Length of coating film peeled off with tape 15∼20 mm.
Poor : Length of coating film peeled off with tape greater than 20 mm.

### d) Browning resistance (stainability)

The external appearance of treated cans which had been drained and dried was observed with the naked eye.
Excellent : No browning
Average : Slightly browned
Poor : Browned

### 3. Conditions for metal surface treatment

### Actual Example 34:

Shaped cans of Al-Mn series (JIS-A3004) were spray-degreased using an acidic degreasing agent (Surfcleaner NHC250, Nippon Paint Co.,Ltd.) at the concentration of 30 g/l at 75°C for 60 s, and washed with water. Then, the cans were subjected to a spray conversion treatment at 50°C for 20 s with a metal surface treatment agent containing phosphoric acid (0.5 g/l), hydrofluoric acid (0.5 g/l), pyrophosphoric acid (0.5 g/l) and the copolymer [phenol:bisphenol = 3:3 (mol/mol)] (0.6 g/l) and adjusted to pH 3.5. Treated cans were washed with water, drained and dried at 190°C for 2 min. Results of the evaluation are shown in Table 11.

**Table 11**

| | | Composition of copolymer in the metal surface treatment agent | | | Evaluation item | | | |
|---|---|---|---|---|---|---|---|---|
| | | Copolymer | Amount of copolymer added (g/l) | Phenol/bisphenol (mol/mol) | Blackening resistance in boiling water | Sliding ability | Coating adhesiveness | Browning resistance |
| Actual example | 34 | (29) | 0.6 | 3:3 | Excellent | Excellent | Excellent | Excellent |
| | 35 | (30) | 1.5 | 2:6 | Excellent | Excellent | Excellent | Excellent |
| | 36 | (31) | 5.0 | 7:2 | Excellent | Excellent | Excellent | Excellent |
| | 37 | (32) | 9.5 | 4:5 | Excellent | Excellent | Excellent | Excellent |
| Comparative example | 19 | (33) | 5.0 | 1:0 | Excellent | Excellent | Excellent | Poor |
| | 20 | (34) | 5.0 | 0:1 | Poor | Average | Excellent | Excellent |

### <Synthesis of copolymer having the chemical formula (29)>

In the following, the method for synthesizing a copolymer having the chemical formula (29) will be described.

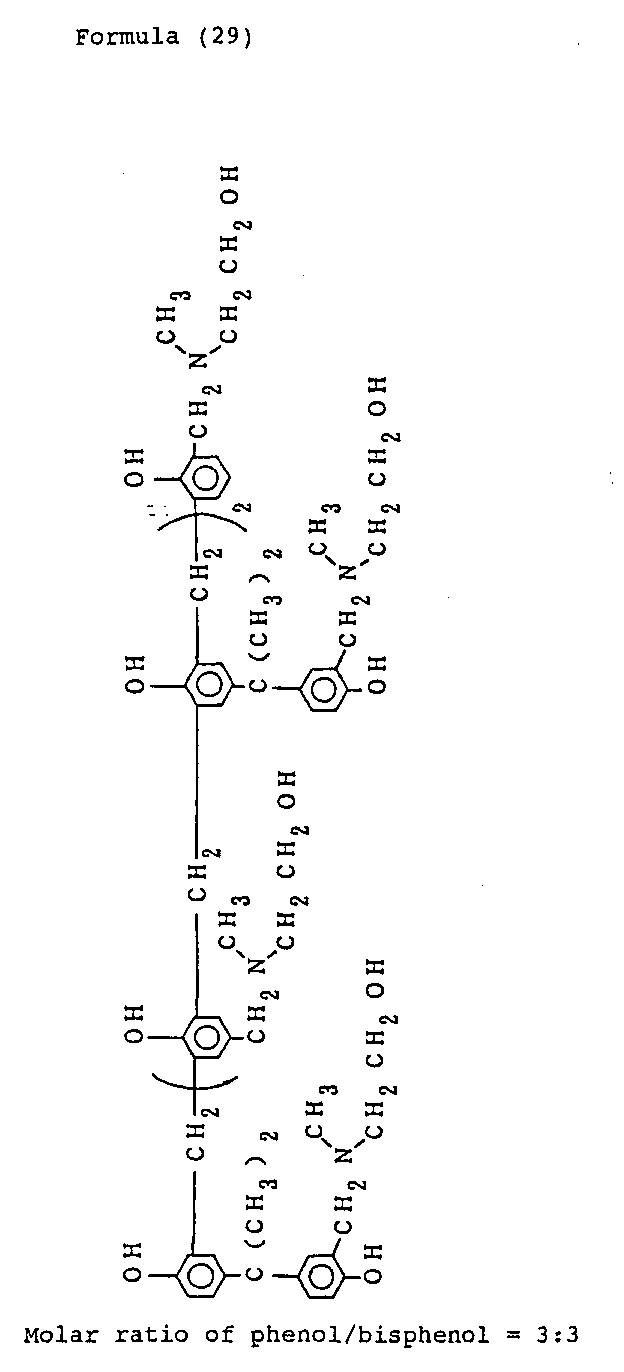

Into a reaction apparatus equipped with stirrer, reflux condenser, and thermometer were placed phenol (3 mol, 282 g), bisphenol A (3 mol, 684 g) and p-toluenesulfonic acid (0.3 g), and reacted at 160°C for 2 h. The inside temperature was then reduced to 100°C, and, to the reaction mixture was added a 37% formaldehyde aqueous solution (5 mol as formaldehyde, 406 g) over 1 h. The resulting mixture was refluxed at 100°C for 2 h, and then subjected to the dehydration reaction at up to 140°C under the normal pressure, then in vacuo. The polycondensation reaction was judged to be completed when the inside temperature elevated to 160°C. The inside temperature was then reduced to 120°C, and butyl cellosolve (1,650 g) was added to dissolve the polycondensation product completely. To the resultant mixture was added pure water (1,650 g) at below 100°C, and, when the inside temperature was reduced to 50°C, N-methylaminoethanol (6 mol, 450 g) was added. To this mixture was added a 37% formaldehyde aqueous solution (6 mol, 486.6 g) over 1 h, and the resultant mixture was reacted at 50°C for 1 h, and further at 90°C for 1.5 h. The resin solution thus obtained had a viscosity 0.15 Pa·s, contained free formaldehyde 0%, free phenol 0%, left non-volatile fraction 31.1% after heating at 180°C for 1 h, and was soluble in phosphoric acid aqueous solution at pH 2.

### Actual Examples 35∼37 and Comparative Examples 19∼20:

Surface treatment was performed using metal surface treatment agents wherein molar ratios of phenol/bisphenol in the copolymers having the following chemical formulae (30)∼ (34) as well as amounts of these copolymers added were varied, and contents of other components were the same as in the actual example 34 described above and according to the procedure of the actual example 34. Results of the evaluation are shown in Table 11. Copolymers represented by the chemical formulae (30)∼(34) were synthesized according to the method for synthesizing the copolymer having the chemical formula (29).

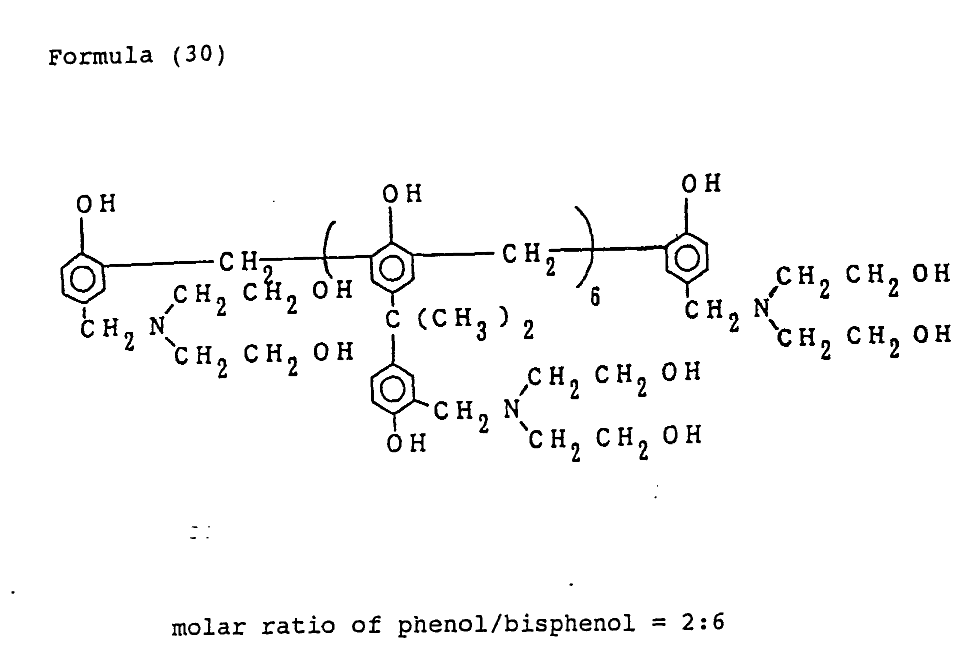

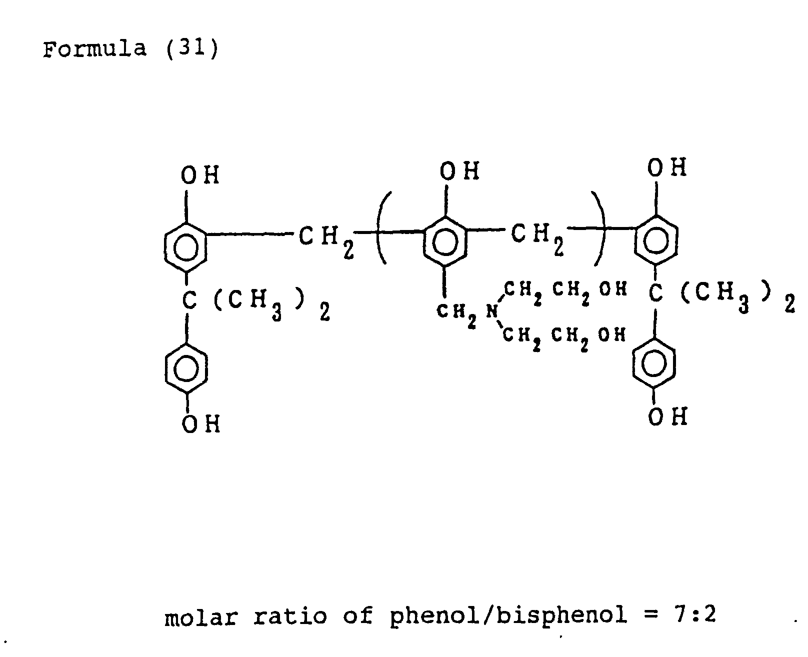

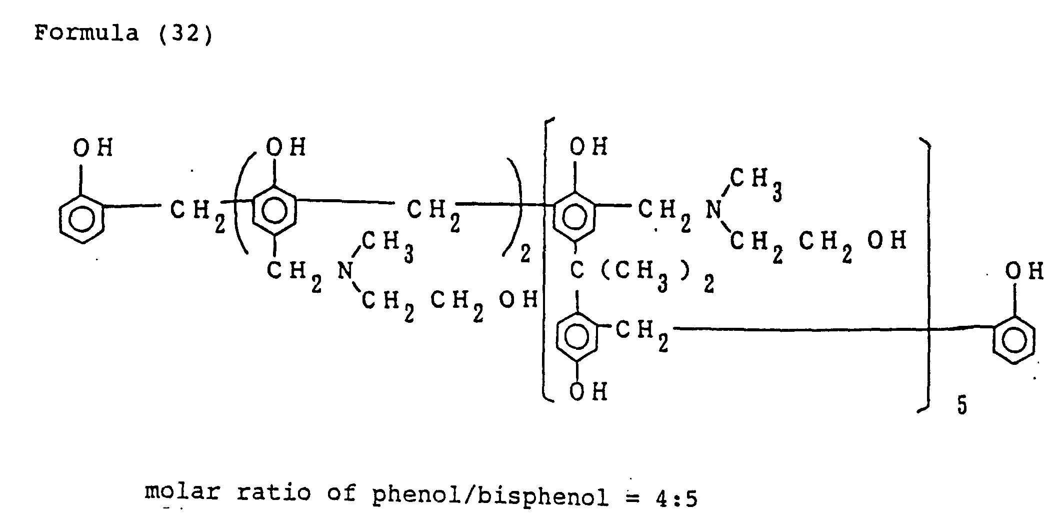

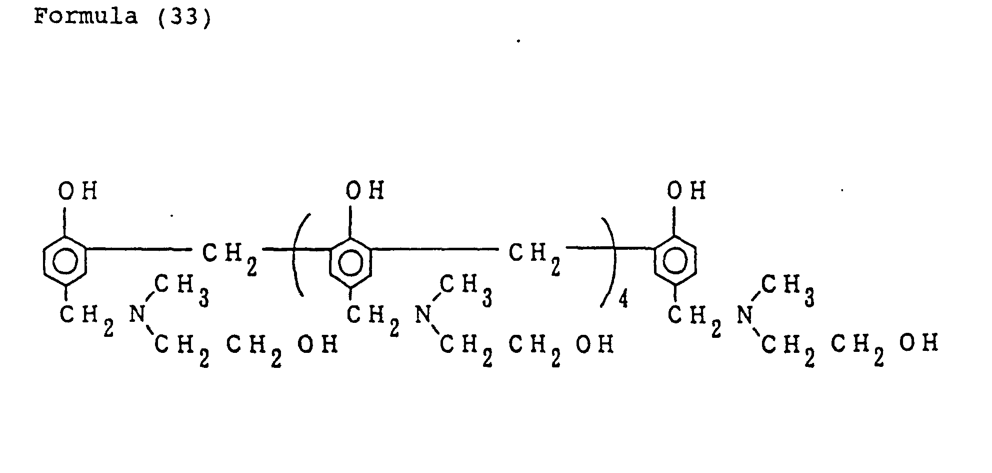

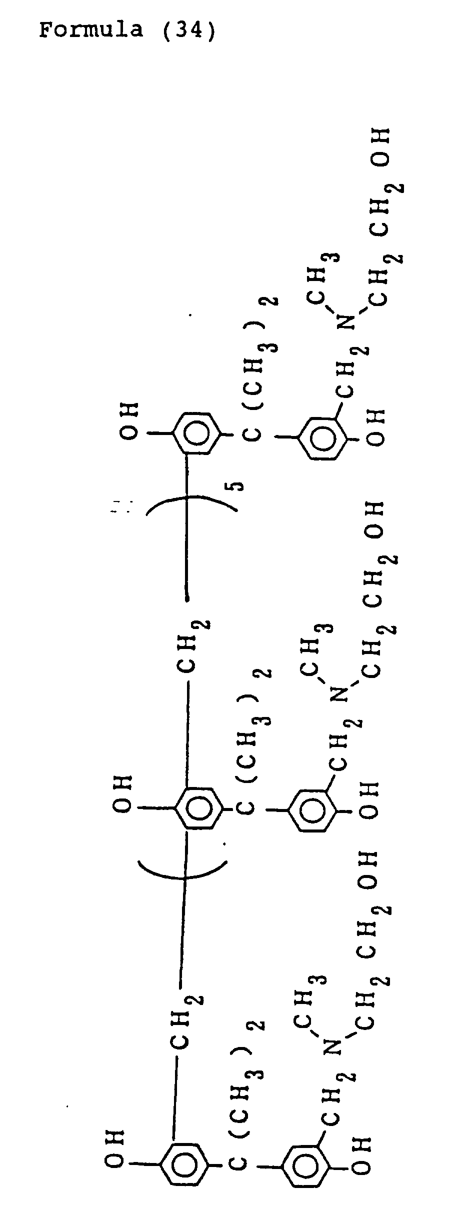

### Actual Example 38:

Shaped cans of Al-Mn series (JIS-A3004) were spray-degreased using an acidic degreasing agent (Surfcleaner NHC250, Nippon Paint Co., Ltd.) at a concentration of 30 g/l at 75°C for 60 seconds, and washed with water. Then, the cans were subjected to a spray-conversion treatment at 50°C for 20 seconds with a metal surface treatment agent containing phosphoric acid (0.5 g/l), hydrofluoric acid (0.5 g/l), pyrophosphoric acid (0.5 g/l) and an amine-modified phenolic resin having the chemical formula (33) (0.6 g/l), an amine-modified bisphenolic A resin having the chemical formula (34) and adjusted to pH 3.5. Then, treated cans were washed with water, drained and dried at 190°C for 2 min. Results of the evaluation are shown in Table 12.

### Actual Examples 39∼41 and Comparative Examples 21∼22:

Surface treatment was performed using metal surface treatment agents wherein contents of amine-modified phenolic and bisphenolic resins represented by chemical formulae (33) and (34), respectively, were varied, and contents of other components were the same as in the actual example 38 described above, and according to the procedure of the example 38.
Results of the evaluation are shown in Table 12.

**Table 12**

| | | Resin composition in metal surface treatment agents | | Evaluation item | | | |
|---|---|---|---|---|---|---|---|
| | | Phenolic resin (33) (g/l)/ bisphenolic resin (34) (g/l) | Molar ratio of phenolic resin/ bisphenolic resin | Blackening resistance in boiling water | Sliding ability | Coating adhesiveness | Browning resistance |
| Actual example | 38 | 0.6/0/.6 | 50/50 | Excellent | Excellent | Excellent | Excellent |
| | 39 | 1.0/0.2 | 83/17 | Excellent | Excellent | Excellent | Excellent |
| | 40 | 0.2/1.0 | 17/83 | Excellent | Excellent | Excellent | Excellent |
| | 41 | 0.1/0.1 | 50/50 | Excellent | Excellent | Excellent | Excellent |
| Comparative example | 21 | 1.2/0 | 100/0 | Excellent | Excellent | Excellent | Poor |
| | 22 | 0/1.2 | 0/100 | Poor | Average | Excellent | Excellent |

These results indicate that, using the agent and method of the metal surface treatment of the present invention, all examined characteristics, including corrosion resistance (blackening resistance in boiling water), sliding ability, and coating adhesiveness of metallic materials, were much improved as compared with those treated with the conventional agent and method.

In the following, preferred embodiments of the metal surface treatment agent containing organic high molecular compounds and other additives will be described.

### Actual Examples 42∼51 and Comparative Examples 23∼25:

### 1. Objects to be treated

Cans fabricated by shaping an aluminum alloy plate of Al-Mn series (JIS-A3004) using DI techniques, etc.

### 2. Method for evaluating the undercoating film

### a) Blackening resistance in boiling water (corrosion resistance)

The bottom portion of cans which had been surface-treated with the composition of the present actual and comparative examples were immersed in boiling water for 30 min, and their external appearance was evaluated in the following scale.
Excellent : No change in external appearance
Average : Slightly blackened
Poor : Blackened

### b) Sliding ability of the undercoating film surface

The motion frictional coefficient of cans surface-treated by the method of the present actual example was. determined using a Heidon-14 tester with 5 mmφ steel ball, a load of 50 g and a touching needle speed of 300 mm/min.
Excellent : Motion frictional coefficient less than 0.6.
Average : Motion frictional coefficient is 0.6∼0.8.
Poor : Motion frictional coefficient greater than 0.8.

### c) Coating adhesiveness

Surface-treated cans were pained with paint [base paint, BE-70-001N 150 mg/m²; clear, EB-69-002N 60 mg/m² (BASF Co., Ltd.)] using a bar coater. Cans thus painted were subjected to wedge-bending, and an adhesive tape (Nichban cellotape) was stuck onto the bent portion, then peeled off. The peeling conditions were evaluated according to the following scale.
Excellent : Length of coating film peeled off with tape less than 15 mm.
Average : Length of coating film peeled off with tape 15∼20 mm.
Poor : Length of coating film peeled off. with tape greater than 20 mm.

### 3. Nitrogen atom-containing high molecular compounds Acrylic resin (M):

HEA^{*1}/p-TBS^{*2}/DMAEA^{*3} = 40/30/30 Molecular weight 3,000
*1 : HEA hydroxyethyl acrylate
*2 : p-TBS para-t-butyl styrene
*3 : DMAEA N-dimethylaminoethyl acrylate
Phenolic resin (N) : compound represented by the following chemical formula (35)
Phenolic resin (O) : compound represented by the following chemical formula (36)

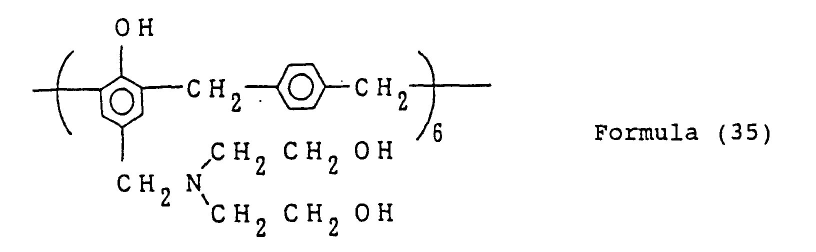

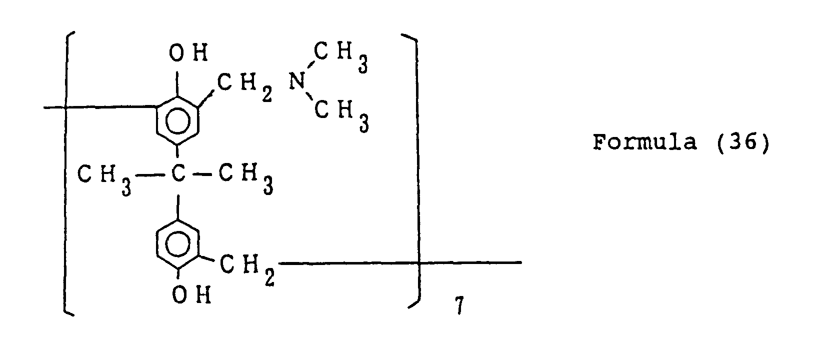

### 4. Conditions for metal surface treatment

### Actual Example 42:

Shaped cans of Al-Mn series (JIS-A3004) were spray-degreased using an acidic degreasing agent (Surfcleaner NHC250, Nippon Paint, Co., Ltd.) at the concentration of 30 g/l at 75°C for 60 seconds, and washed with water. The cans were then subjected to a spray conversion treatment at 50°C for 20 seconds with a metal surface treatment agent containing phosphoric acid (0.5 g/l), hydrofluoric acid (0.5 g/l), a nitrogen atom containing acrylic resin (1.0 g/l) as the organic high molecular compound and hydrogen peroxide (0.5 g/l) as the oxidizing agent and adjusted to pH 3.5. Treated cans were washed with water, drained, and dried at 190°C for 2 min. Results of the evaluation are shown in Table 13.

### Actual Examples 43∼51 and Comparative Examples 23∼25:

Surface treatment was performed using metal surface treatment agents wherein the species and content of organic high molecular compounds and oxidizing agents were changed with the pH value being altered, and contents of other components were the same as in the actual example 42 described above. Results of the evaluation are shown in Table 13.

**Table 13**

| | | Composition of metal surface treatment agent | | | | | Evaluation | | |
|---|---|---|---|---|---|---|---|---|---|
| | | Organic high molecular compound | | Oxidizing agent | | pH | Blackening resistance in boiling water | Sliding ability | Coating adhesiveness |
| | | Species | Content (g/l) | Species | Content (g/l) | | | | |
| Actual example | 42 | (M) | 1.0 | H₂O₂ | 0.5 | 3.5 | Excellent | Excellent | Excellent |
| | 43 | (M) | 1.0 | NaNO₂ | 0.5 | 3.5 | Excellent | Excellent | Excellent |
| | 44 | (M) | 1.0 | NaClO₃ | 0.5 | 3.5 | Excellent | Excellent | Excellent |
| | 45 | (M) | 1.0 | NaBrO₃ | 0.5 | 3.5 | Excellent | Excellent | Excellent |
| | 46 | (M) | 1.0 | H₂O₂ | 0.5 | 3.5 | Excellent | Excellent | Excellent |
| | 47 | (M) | 0.01 | H₂O₂ | 0.5 | 3.5 | Excellent | Excellent | Excellent |
| | 48 | (M) | 1.0 | H₂O₂ | 9.0 | 3.5 | Excellent | Excellent | Excellent |
| | 49 | (M) | 9.0 | H₂O₂ | 0.02 | 3.5 | Excellent | Excellent | Excellent |
| | 50 | (N) | 1.0 | H₂O₂ | 0.5 | 3.5 | Excellent | Excellent | Excellent |
| | 51 | (O) | 1.0 | H₂O₂ | 0.5 | 3.5 | Excellent | Excellent | Excellent |
| Comparative example | 23 | (M) | 1.0 | H₂O₂ | 0.005 | 3.5 | Poor | Average | Excellent |
| | 24 | (M) | 0.005 | H₂O₂ | 0.5 | 3.5 | Poor | Poor | Excellent |
| | 25 | (M) | 15.0 | H₂O₂ | 0.5 | 3.5 | Excellent | Excellent | Average |

These results indicate that, using the metal surface treatment agent of the present invention, all characteristics, including corrosion resistance (blackening resistance in boiling water), sliding ability, and coating adhesiveness, of metallic materials were improved as compared with those treated with the conventional agent.

### Actual Examples 52∼58 and Comparative Examples 26∼27:

### 1. Objects to be treated

Cans fabricated by shaping an aluminum alloy plate of Al-Mn series (JIS-A3004) using DI techniques, etc.

### 2. Method for evaluating the undercoating film

### a) Blackening resistance in boiling water (corrosion resistance)

Cans which had been surface-treated with the composition of the present actual and comparative examples were immersed in boiling water for 30min, and their external appearance was evaluated according to the following scale.
Excellent : No change in external appearance
Aerage : Slightly blackened
Poor : Blackened

### b) Sliding ability of the undercoating film surface

The motion frictional coefficient of cans which had been subjected to the conversion treatment by the method of the present actual example was determined using a Heidon-14 tester with 5 mmφ steel ball, a load of 50 g and a touching needle speed of 300 mm/min.
Excellent : Motion frictional coefficient less than 0.55
Average : Motion frictional coefficient 0.55∼0.8
Poor : Motion frictional coefficient greater than 0.8

### c) Coating adhesiveness

Conversion-treated cans were painted with paint [EB-70-001N 150 mg/m²; Clear, EB-69-002N 60 mg/m² (BASF Co.)] using a bar coater. Cans thus painted were subjected to wedge-bending, and an adhesive tape (Nichiban cellotape) was suck onto the bent portion, then peeled off. The peeling conditions were evaluated according to the following scale.
Excellent : Length of coating film peeled off with tape less than 15 mm.
Average : Length of coating film peeled off with tape 15∼20 mm.
Poor : Length of coating film peeled off with tape greater than 20 mm.

### 3. Conditions for metal surface treatment

### Actual Example 52:

Shaped cans of Al-Mn series (JIS-A3004) were spray-degreased using an acidic degreasing agent (Surfcleaner NHC250, Nippon Paint, Co., Ltd.) at the concentration of 30 g/l at 75°Cfor 60 seconds, and washed with water. The cans were then subjected to spray conversion treatment at 50°C for 20 seconds with a metal surface treatment agent containing phosphoric acid (0.5 g/l), hydrofluoric acid (0.5 g/l), pyrophosphoric acid (0.5 g/l), aluminum ions and the following (P) as an organic high molecular compound and adjusted to pH 3.5. Then, the treated cans were washed with water, drained and dried at 190°C for 2 min. Results of the evaluation are shown in Table 14. Actual Example 52 ∼ 58 and Comparative

### Example 26 ∼ 27:

Surface treatment was performed using metal surface treatment agents wherein the species and content of organic high molecular compounds, content of phosphoric ion, content of aluminum ion, changing with the pH value being altered, and content of other components were the same as in the actual example 52 described above. Results of the evaluation are shown in Table 14.

**Table 14**

| | | Composition of metal surface treatment agent | | | | | Evaluation | | |
|---|---|---|---|---|---|---|---|---|---|
| | | Organic high molecular compound | | Phosphoric acid (g/l) | Al³⁺ (g/l) | pH | Blackening resistance in boiling water | Sliding ability | Coating adhesiveness |
| | | Species | Content (g/l) | | | | | | |
| Actual example | 52 | (P) | 1.0 | 0.5 | 0.1 | 3.5 | Excellent | Excellent | Excellent |
| | 53 | (P) | 4.0 | 0.5 | 0.01 | 3.5 | Excellent | Excellent | Excellent |
| | 54 | (P) | 0.5 | 0.2 | 0.5 | 3.5 | Excellent | Excellent | Excellent |
| | 55 | (P) | 1.0 | 0.5 | 0.25 | 3.5 | Excellent | Excellent | Excellent |
| | 56 | (Q) | 1.0 | 0.5 | 0.1 | 3.5 | Excellent | Excellent | Excellent |
| | 57 | (R) | 1.0 | 0.5 | 0.1 | 3.5 | Excellent | Excellent | Excellent |
| | 58 | (M) | 1.0 | 0.5 | 0.1 | 3.5 | Excellent | Excellent | Excellent |
| Comparative example | 26 | (P) | 1.0 | 0.5 | 0 | 3.5 | Poor | Average | Excellent |
| | 27 | (P) | 1.0 | 0.5 | 1 | 3.5 | Poor | Excellent | Excellent |
| (P) : Phenolic resin, represented by the following chemical formula (37) | | | | | | | | | |
| (Q): Polyvinylphenolic resin, represented by the following chemical formula (38) | | | | | | | | | |
| (R): Bisphenolic A resin, represented by the following chemical formula (39) | | | | | | | | | |
| (M): Amine-modified cationic resin = acrylic resin (described above) | | | | | | | | | |

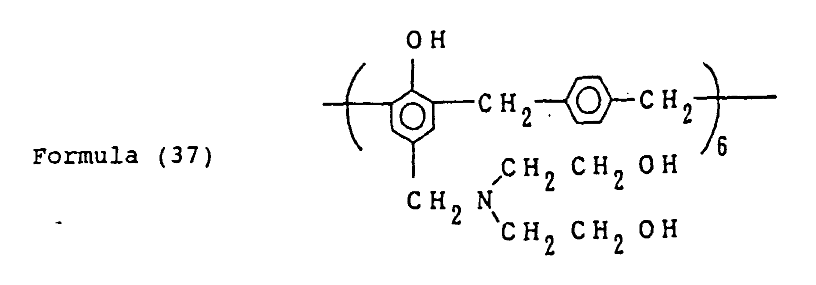

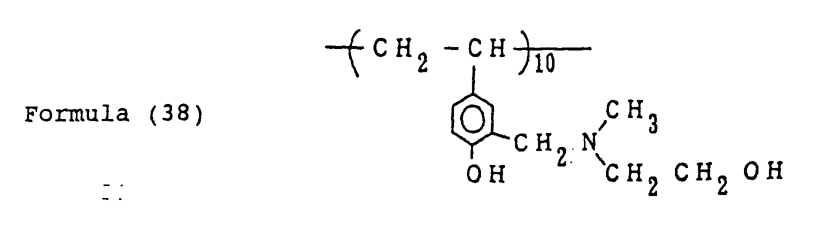

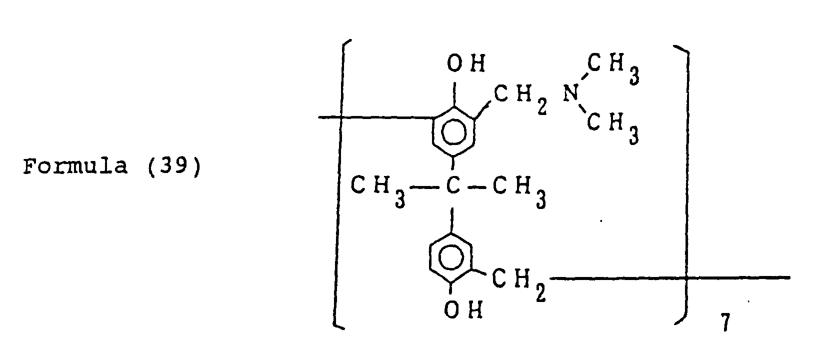

These results clearly show that corrosion resistance (blackening resistance in boiling water), sliding ability, coating adhesiveness, and external appearance of objects treated with the metal surface treatment agent of the present invention are excellent even for treatment in presence of low concentrations of phosphoric acid.

### Actual examples 59∼70 and comparative examples 28∼31:

### 1. Objects to be treated

Cans fabricated by shaping an aluminum alloy plate of Al-Mn series (JIS-A3004) using DI techniques, etc.

### 2. Method for evaluating the undercoating film

### a) Blackening resistance in boiling water (corrosion resistance)

The bottom portion of cans which had been surface-treated with the composition of the present actual and comparative examples was immersed in boiling tap water for 30 min, and the external appearance was evaluated according to the following scale.
Excellent : No change in external appearance
Average : Slightly blackened
Poor : Blackened

### b) Sliding ability of the undercoating film surface

Motion frictional coefficient of cans which had been subjected to the conversion treatment was determined using a Heidon-14 tester with 5 mmφ steel ball a load of 50 g and a touching needle speed of 300 mm/min.
Excellent : Motion frictional coefficient less than 0.6
Average : Motion frictional coefficient 0.6∼0.8
Poor : Motion frictional coefficient greater than 0.8

### c) Coating adhesiveness

Surface-treated cans were painted with paint [EB-70-001N 150 mg/m²; Clear, EB-69-002N 60 mg/m²) (BASF Co.)] using a bar coater. Cans thus painted were subjected to wedge-bending, and an adhesive tape (Nichian cellotape) was stuck onto the bent portion, then peeled off. The peeling conditions were evaluated according to the following scale.
Excellent : Length of coating film peeled off with tape less than 15 mm
Average : Length of coating film peeled off with tape 15∼20 mm
Poor : Length of coating film peeled off with tape greater than 20 mm

### 3. Cationic nitrogen atom-containing resin

(P) : Phenolic resin represented by the chemical formula (37) described above
(Q) : Polyvinylphenolic resin represented by the chemical formula (38) described above
(R) : Bisphenol A resin represented by the chemical formula (39) described above
(M) : Amino-modified cationic resin described above

### 4. Conditions for metal surface treatment

### Actual Example 59:

Shaped cans of Al-Mn series (JIS-A3004) were spray-degreased using an acidic degreasing agent (Surfcleaner NHC250, Nippon Paint, Co., Ltd.) at a concentration of 30 g/l at 75°C for 60 seconds, and then washed with water. The cans were then subjected to a spray conversion treatment at 50°C for 20 seconds with a metal surface treatment agent containing phosphoric acid (0.5 g/l), hydrofluoric acid (0.5 g/l), a cationic nitrogen atom-containing acrylic resin (1 g/l) as the organic high molecular compound, and molybdic acid ion (0.02 g/l) as the polyvalent anion and adjusted to pH 3.5. The treated cans were then washed with water, drained and dried at 190°C for 2 min. Results of the evaluation are shown in Table 15.

### Actual Examples 60∼70 and Comparative Examples 28∼31:

As shown in Table 15, surface treatment was performed using metal surface treatment agents wherein species and contents of the organic high molecular compounds described above as well as polyvalent anions were varied under different pHs, and contents of other components were the same as in the actual example 59 described above and according to the procedure of the actual example 59 described above. Results of the evaluation are shown in Table 15.

**Table 15**

| | | Composition of metal surface treatment agent | | | | | Evaluation item | | |
|---|---|---|---|---|---|---|---|---|---|
| | | Organic high molecular compound | | Polyvalent anion | | pH | Blackening resistance in boiling water | Sliding ability | Coating adhesiveness |
| | | Species | Content (g/l) | Species | (g/l) | | | | |
| Actual example | 59 | (P) | 1.0 | Molybdic acid | 0.02 | 3.5 | Excellent | Excellent | Excellent |
| | 60 | (P) | 1.0 | Tungstic acid | 0.05 | 3.5 | Excellent | Excellent | Excellent |
| | 61 | (P) | 0.1 | Tungstic acid | 5 | 3 | Excellent | Excellent | Excellent |
| | 62 | (P) | 5.0 | Tungstic acid | 0.1 | 4 | Excellent | Excellent | Excellent |
| | 63 | (P) | 10.0 | Phosphomolybdic acid | 0.01 | 3.5 | Excellent | Excellent | Excellent |
| | 64 | (P) | 1.0 | Phosphotungstic acid | 0.05 | 3.5 | Excellent | Excellent | Excellent |
| | 65 | (P) | 2.0 | Silicotungstic acid | 0.03 | 3.5 | Excellent | Excellent | Excellent |
| | 66 | (P) | 0.01 | Silicotungstic acid | 5 | 3.5 | Excellent | Excellent | Excellent |
| | 67 | (P) | 1.0 | Vanadic acid | 0.5 | 3.5 | Excellent | Excellent | Excellent |
| | 68 | (Q) | 1.0 | Molybdic acid | 0.05 | 3.5 | Excellent | Excellent | Excellent |
| | 69 | (R) | 1.0 | Molybdic acid | 0.05 | 3.5 | Excellent | Excellent | Excellent |
| | 70 | (M) | 1.0 | Molybdic acid | 0.05 | 3.5 | Excellent | Excellent | Excellent |
| Comparative example | 28 | (P) | 1.0 | - | - | 3.5 | Poor | Average | Excellent |
| | 29 | (P) | 0.005 | Molybdic acid | 0.05 | 3.5 | Poor | Poor | Average |
| | 30 | (P) | 15.0 | Molybdic acid | 0.05 | 3.5 | Excellent | Excellent | Average |
| | 31 | (P) | 1.0 | Tungstic acid | 15 | 3.5 | Poor | Poor | Average |

These results clearly have shown that not only corrosion resistance (blackening resistance in boiling water), but also sliding ability as well as coating adhesiveness of objects treated with the metal surface treatment agent of the present invention are all improved as compared with those treated with the conventional agent.

### Possible industrial applications

Metal surface treatment agents and methods in accordance with the present invention are applicable for the surface treatment of food cans, automobile bodies, steel plate coil coating, building materials, etc.

## Claims

1. A metal surface treatment agent comprising: water and 0.01 ∼ 10 g/l of a water-soluble, water-dispersive, or emulsive organic high molecular compound or its salt having a molecular weight of 300 ∼ 10,000 which contains more than one nitrogen atom, represented by the following formula [a], and meets the following condition [b] or [c]; or
0.01 ∼ 10 g/l of a water-soluble, water-dispersive, or emulsive organic high molecular compound or its salt having a molecular weight of 1,000 ∼ 10,000 which contains more than one cationic sulfur atom and meets the following condition [d];
and, in addition to one of the above compounds, at least one compound selected from heavy metal ions in an amount of 0.01 ∼ 10 g/l, oxidizing agents in an amount of 0.01 ∼ 10 g/l, inorganic acids in an amount of 0.01 ∼ 10 g/l, aluminum ions in an amount of 0.01 ∼ 0.5 g/l, polyvalent anions in an amount of 0.003 ∼ 10 g/l, etchants in an amount of 0.005 ∼ 5 g/l and etchant supplements in an amount of 0.003 ∼ 5 g/l;
[a]: 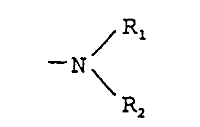 where R₁ and R₂ = H, OH or C_{1∼10} straight or branched chain alkyl groups with possible substitutions, or C_{1∼10} straight or branched chain alkanol groups with possible substitutions
or 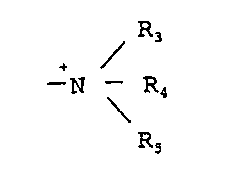 where R₃, R₄ and R₅ = H, OH or C_{1∼10} straight or branched chain alkyl groups with possible substitutions, or C_{1∼10} straight or branched chain alkanol groups with possible substitutions ;
[b]:
containing 1∼5 phenolic groups, 1∼5 hydroxyl groups, and 1∼10 nitrogen atoms per molecular weight 500 ;
[c]:
being an acrylic resin which is a copolymer comprising monomers represented by the following structural formulae [e], [f], and [g], 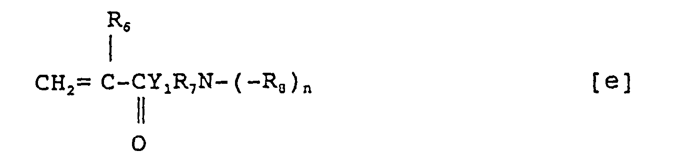 where R₆ = H or methyl group,
R₇ = C_{1∼5} alkylene group,
R₈ = C_{1∼5} alkyl group,
Y₁ = -NH- or -O-,
n = 2 or 3 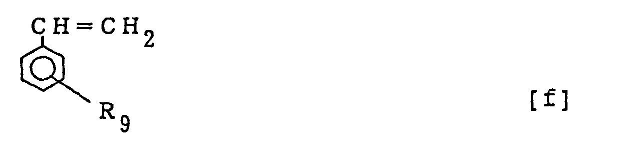 where R₉ = methyl, ethyl, butyl or *tert*-butyl groups 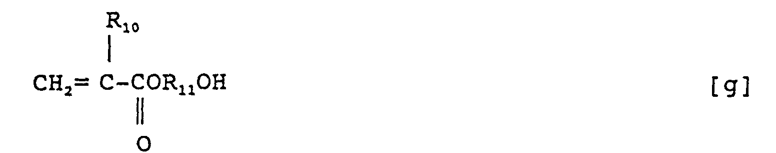 where R₁₀ = H or methyl group,
R₁₁ = C_{1∼5} alkylene group ;
[d] containing 1∼5 phenolic groups, 1∼12 hydroxyl groups, and 0.1∼7 cationic sulfur atoms per molecular weight 500.

2. The metal surface treatment agent according to Claim 1 wherein said compound meeting the condition [b] is a phenolic resin comprising the repeating unit represented by the following formula [h], 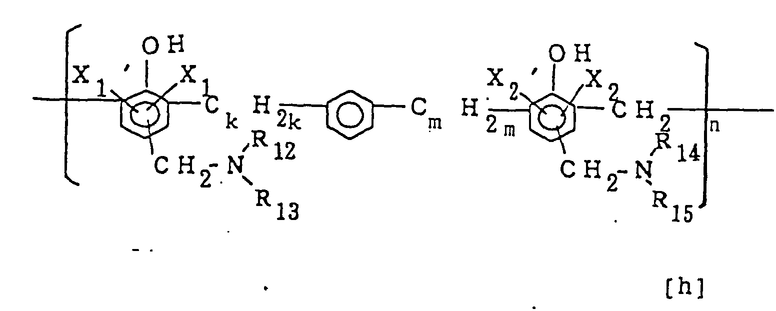 where R₁₂, R₁₃, R₁₄ and R₁₅ = H, C_{1∼5} alkyl or alkanol groups with or without substitutions,
X₁, X₁', X₂ and X₂' = H, OH or C_{1∼5} alkyl groups with or without substitution
k and m = 1∼5, n = 1∼3.

3. The metal surface treatment agent according to Claim 1 wherein said compound which meets the condition [b] is an phenolic resin where said phenolic resin is a polycondensation product or its salt comprising a phenolic compound monomer having the following structure [i], dialkylbenzene glycol monomer having the following structure [j], formaldehyde and an amine having the following structure [k], 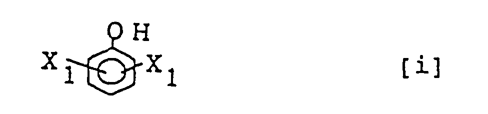 where X₁, X₁', X₂ and X₂' = H, OH or C_{1∼5} alkyl groups with or without substitution 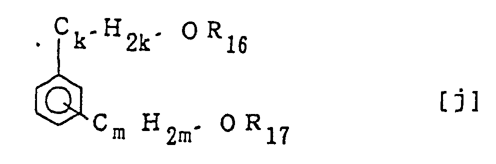 where R₁₆ and R₁₇ = H, OH or C_{1∼5} alkyl groups with or without substitution
k' and m' = 1∼5
Formula [k]: 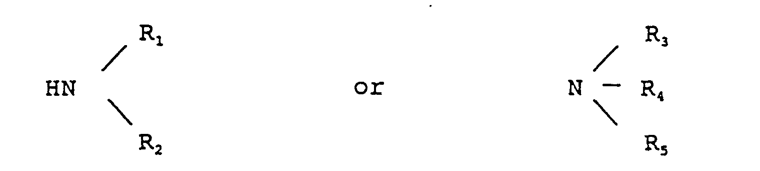 where R₁∼R₅ = H, OH or C_{1∼10} straight or branched chain alkyl groups with possible substitutions, or C_{1∼10} straight or branched chain alkanol groups with possible substitutions.

4. The metal surface treatment agent according to Claim 1 wherein said compound which meets the condition [b] is a phenolic resin which is obtained by reacting a phenolic condensation product which is prepared by reacting, in the presence of organic or inorganic acids as the catalyst, 1 mol of a phenolic compound monomer represented by the formula [i] described above 0.02∼0.6 mol of dialkylbenzene glycol monomer represented by the formula [j] described above and formaldehyde the amount of which is adjusted so that the sum of amounts of formaldehyde and dialkylbenzene glycol monomer represented by the formula [j] described above to be 0.7∼0.9 mol, with 0.5∼2.0 mol of an amine represented by the formula [k] described above and the equimolar amount of formaldehyde as that of said amine.

5. The metal surface treatment agent according to Claim 1 wherein said compound which meets the condition [b] is a phenolic resin which comprises a repeating phenolic unit represented by the following formula [l] and other repeating bisphenolic unit represented by the following formulae [m] and/or [n], with the weight ratio of [l]: [m] and/or [n] being 90:10∼10:90, 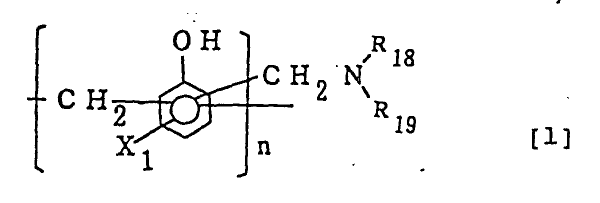 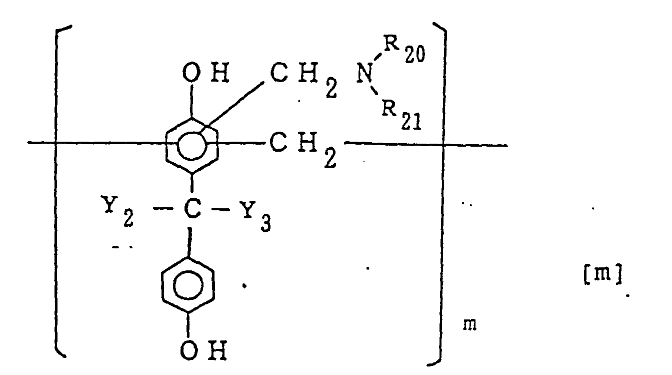 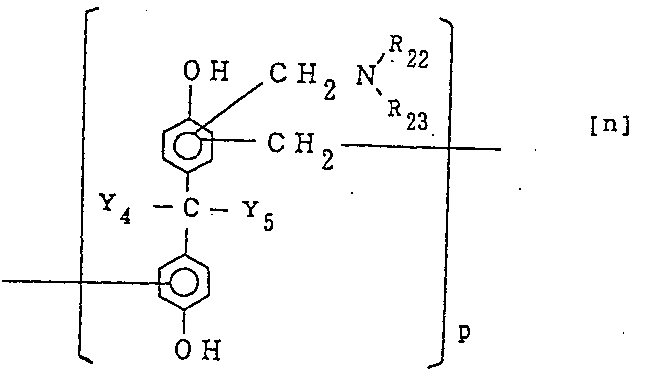 where R₁₈, R₁₉, R₂₀, R₂₁, R₂₂, R₂₃, X₁, Y₂, Y₃, Y₄ and Y₅ = H, OH, C_{1∼10} straight or branched chain alkyl groups, or C_{1∼10} straight or branched chain alkanol groups, and m, n and p are 2∼50, respectively; these alkyl or alkanol groups may be substituted with functional groups.

6. The metal surface treatment agent according to Claim 1 wherein said compound which meets the condition [b] is a phenolic resin which is a phenol-bisphenol-formaldehyde polycondensation product or its salt which is a condensation product composed of a phenolic compound having the structure [i] described above, a bisphenolic compound having the structure [o] shown below and formaldehyde, and linked to at least one kind of amines having the structure [k] described above, where the molar ratio of said phenolic compound [i] and said bisphenolic compound [o] in said phenol-bisphenol-formaldehyde polycondensation product or its salt is 9:1∼1:9, 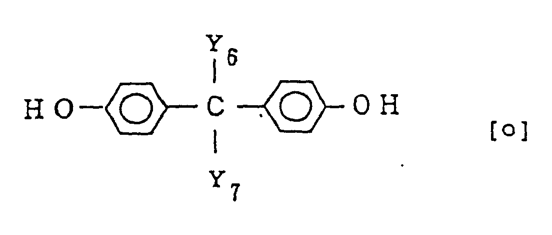 where Y₆ and Y₇ = H, OH or C_{1∼10} straight or branched chain alkyl groups, or C_{1∼10} straight or branched alkanol groups ; these alkyl or alkanol groups may be substituted with functional groups.

7. The metal surface treatment agent according to any one of Claims 1 to 6 which further comprises heavy metal or its fluoride, nitrate and phosphate.

8. The metal surface treatment agent according to any one of Claims 1 to 6 which further contains an oxidizing agent.

9. The metal surface treatment agent according to Claim 8 which further comprises inorganic acid.

10. The metal surface treatment agent according to Claim 9 whic further comprises heavy metal at 10 g/l.

11. The metal surface treatment agent according to Claims 7 or 10 wherein said heavy metal is at least any one of those including zirconium, molybdenum, tungsten, niobium, nickel, cobalt, manganese and tantalum.

12. The metal surface treatment agent according to Claim 8 wherein said oxidizing agent is any one of those including hydrogen peroxide, nitrous acid, nitrite, perboric acid, chloric acid, chlorate, bromic acid and bromate.

13. The metal surface treatment agent according to any one of Claims 1 to 6 which further contains phosphate ions and aluminum ions, wherein said metal surface treatment agent comprises said phosphate ions at 0.01 ∼ 0.8 g/l.

14. The metal surface treatment agent according to any one of Claims 1 to 6 which further contains polyvalent anions wherein said metal surface treatment agent comprises said polyvalent anions at 0.03 ∼ 10 g/l.

15. The metal surface treatment agent according to Claim 14 wherein said polyvalent anion is at least one or more of those including molybdenic acid, tungstic acid, vanadic acid, phosphomolybdenic acid, phosphotungstic acid and silicotungstic acid, and their salts.

16. A metal surface treatment method wherein said method comprises the contact treatment of metal surface with the metal surface treatment agent according to any one of Claims 1∼15, successive washing with water and drying.

17. A metallic material treated with the metal surface treatment agent according to any one of Claims 1 to 15.

## Patentansprüche

1. Behandlungsmittel für Metalloberflächen, umfassend:
Wasser und
0,01 ∼ 10 g/l einer in Wasser löslichen, in Wasser dispergierbaren oder emulgierbaren, organischen, hochmolekularen Verbindung oder deren Salz mit einem Molekulargewicht von 300 ∼ 10.000, die/das mehr als ein Stickstoffatom, dargestellt durch die folgende Formel **[a]** enthält, und die folgende Bedingung **[b]** oder **[c]** erfüllt; oder
0,01 ∼ 10 g/l einer in Wasser löslichen, in Wasser dispergierbaren oder emulgierbaren, organischen, hochmolekularen Verbindung oder deren Salz mit einem Molekulargewicht von 1.000 ∼ 10.000, die/das mehr als ein kationisches Schwefelatom enthält und die folgende Bedingung **[d]** erfüllt;
und zusätzlich zu einer der obigen Verbindungen mindestens eine Verbindung, ausgewählt aus Schwermetallionen in einer Menge von 0,01 ∼ 10 g/l, Oxidationsmittel in einer Menge von 0,01 ∼ 10 g/l, anorganische Säuren in einer Menge von 0,01 ∼ 10 g/l, Aluminiumionen in einer Menge von 0,01 ∼ 0,5 g/l, polyvalente Anionen in einer Menge von 0,003 ∼ 10 g/l, Ätzmittel in einer Menge von 0,005 ∼ 5 g/l und
Ätzzusätze in einer Menge von 0,003 ∼ 5 g/l;
**[a]**: 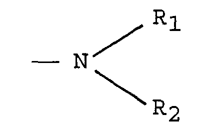 worin R₁ und R₂ = H, OH oder gegebenenfalls substituierte geradkettige oder verzweigte C_{1∼10}-Alkylgruppen oder gegebenenfalls substituierte geradkettige oder verzweigte C_{1∼10}-Alkanolgruppen 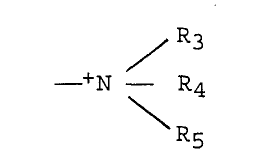 worin R₃, R₄ und R₅ = H, OH oder gegebenenfalls substituierte, geradkettige oder verzweigte C_{1∼10}-Alkylgruppen oder gegebenenfalls substituierte geradkettige oder verzweigte C_{1∼10}-Alkanolgruppen;
**[b]** :
enthaltend 1 ∼ 5 phenolische Gruppen, 1 ∼ 5 Hydroxylgruppen und 1 ∼ 10 Stickstoffatome pro Molekulargewicht 500;
**[c]** :
darstellend ein Acrylharz, das ein Copolymer, umfassend durch die folgenden Strukturformeln **[e], [f]** und **[g]** dargestellte Monomere, ist, 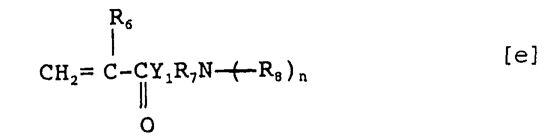 worin
R₆ = H oder Methylgruppe,
R₇ = C_{1∼5}-Alkylengruppe,
R₈ = C_{1∼5}-Alkylgruppe,
Y₁ = -NH- oder -O-,
n = 2 oder 3 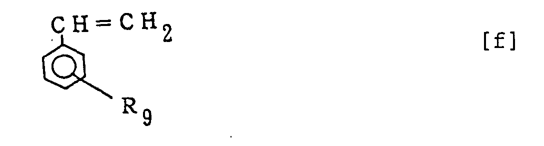
worin R₉ = Methyl-, Ethyl-, Butyl- oder tert-Butylgruppen, 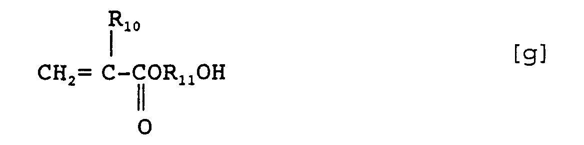 worin R₁₀ = H oder Methylgruppe,
R₁₁ = C_{1∼5}-Akylengruppe;
**[d]:**
enthaltend 1 ∼ 5 phenolische Gruppen, 1 ∼ 12 Hydroxylgruppen und 0,1 ∼ 7 kationische Schwefelatome pro Molekulargewicht 500.

2. Behandlungsmittel für Metalloberflächen gemäß Anspruch 1, worin die genannte Verbindung, die die Bedingung **[b]** erfüllt, ein phenolisches Harz ist, das die durch die folgende Formel **[h]** dargestellte Struktureinheit umfasst: 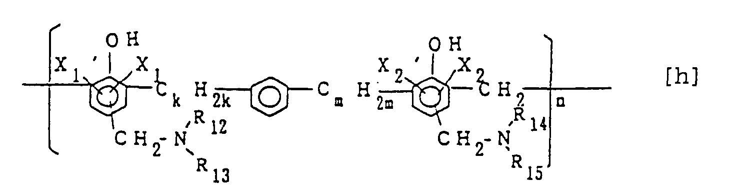 worin R₁₂, R₁₃, R₁₄ und R₁₅ = H, substituierte oder unsubstituierte C_{1∼5}-Alkyl- oder -Alkanolgruppen, X₁, X₁', X₂ und X₂' = H, OH oder substituierte oder unsubstituierte C_{1∼5}-Alkylgruppen,
k und m = 1∼5, n = 1∼3.

3. Behandlungsmittel für Metalloberflächen gemäß Anspruch 1, worin die genannte Verbindung, die die Bedingung **[b]** erfüllt, ein phenolisches Harz ist, wobei das genannte phenolische Harz ein Polykondensationsprodukt oder dessen Salz ist, umfassend eine phenolische Monomerverbindung, die folgende Struktur **[i]** aufweist, Dialkylbenzolglykolmonomer, das die folgende Struktur **[j]** aufweist, Formaldehyd und ein Amin, das die folgende Struktur **[k]** aufweist, 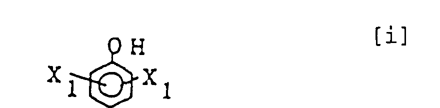 worin X₁, X₁', X₂ und X₂' = H, OH oder substituierte oder unsubstituierte C_{1∼5}-Alkylgruppen, 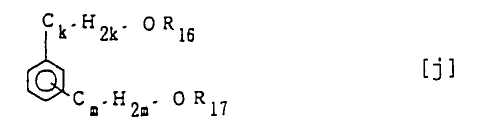 worin R₁₆ und R₁₇ = H, OH oder substituierte oder unsubstituierte C_{1∼5}-Alkylgruppen,
k' und m' = 1 ∼ 5
Formel [k] : 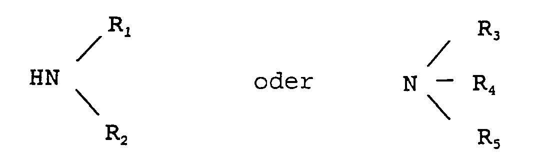 worin R₁ ∼ R₅ = H, OH oder gegebenenfalls substituierte, geradkettige oder verzweigte C_{1∼10}-Alkylgruppen, oder gegebenenfalls substituierte, geradkettige oder verzweigte C_{1∼10}-Alkanolgruppen

4. Behandlungsmittel für Metalloberflächen gemäß Anspruch 1, worin die genannte Verbindung, die die Bedingung [b] erfüllt, ein phenolisches Harz ist, das durch Umsetzen eines phenolischen Kondensationsproduktes erhalten wird, das durch Umsetzen von einem Mol einer phenolischen Monomerverbindung, dargestellt durch die oben beschriebene Formel [i], 0,02 ∼ 0,6 mol Dialkylbenzolglykolmonomer, dargestellt durch die oben beschriebene Formel [j], und Formaldehyd, dessen Menge so gewählt wird, dass die Summe der Menge aus Formaldehyd und Dialkylbenzolglykolmonomer, dargestellt durch die oben beschriebene Formel [j], 0,7 ∼ 0,9 mol ist, mit 0,5 ∼ 2,0 mol eines Amins, dargestellt durch die oben beschriebene Formel [k], und einer bezüglich des Amins äquimolaren Menge Formaldehyd in Gegenwart von organischen oder anorganischen Säuren als Katalysator hergestellt wird.

5. Behandlungsmittel für Metalloberflächen gemäß Anspruch 1, worin die genannte Verbindung, die die Bedingung [b] erfüllt, ein phenolisches Harz ist, das eine phenolische Struktureinheit, dargestellt durch die folgende Formel **[l]**, und andere Struktureinheiten vom Bisphenoltyp, dargestellt durch die folgenden Formeln **[m]** und/oder **[n],** umfasst, wobei das Gewichtsverhältnis [l]:[m] und/oder [n] 90:10 ∼ 10:90 ist, 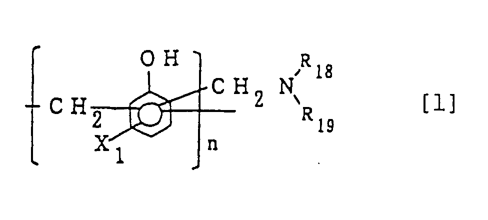 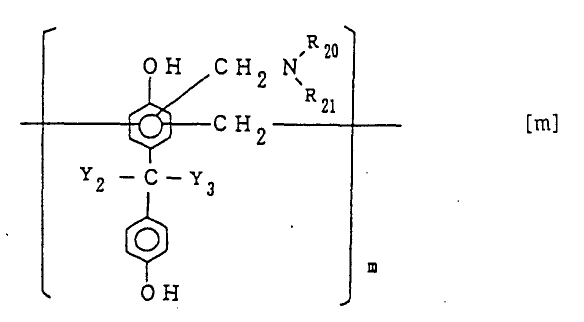 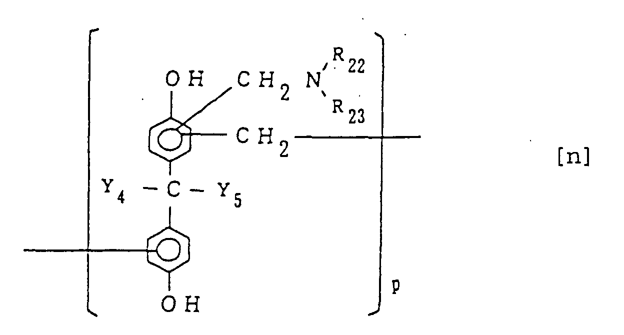 worin R₁₈, R₁₉, R₂₀, R₂₁, R₂₂, R₂₃, X₁, Y₂, Y₃, Y₄ und Y₅ = H, OH, geradkettige oder verzweigte C_{1∼10}-Alkylgruppen oder geradkettige oder verzweigte C_{1∼10}-Alkanolgruppen und m, n und p jeweils 2 ∼ 50 sind und diese Alkyl- oder Alkanolgruppen mit funktionellen Gruppen substituiert sein können.

6. Behandlungsmittel für Metalloberflächen gemäß Anspruch 1, worin die genannte Verbindung, die die Bedingung **[b]** erfüllt, ein phenolisches Harz ist, das ein Phenol-Bisphenol-Formaldehyd-Polykondensationsprodukt oder dessen Salz ist, das ein Kondensationsprodukt, aufgebaut aus einer phenolischen Verbindung, die die oben beschriebene Struktur [i] aufweist, einer Bisphenolverbindung, die die unten gezeigte Struktur [o] aufweist, und Formaldehyd ist und mit mindestens einer Art von Aminen, die die oben beschriebene Struktur [k] aufweisen, verbunden ist, wobei das molare Verhältnis der genannten phenolischen Verbindung [i] und der genannten Bisphenolverbindung [o] im genannten Phenol-Bisphenol-Formaldehyd-Polykondensationsprodukt oder dessen Salz 9:1 ∼ 1:9 ist, 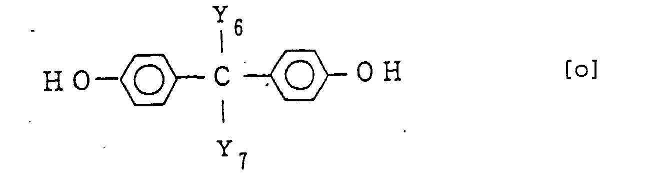 worin Y₆ und Y₇ = H, OH oder geradkettige oder verzweigte C_{1∼10}-Alkylgruppen oder geradkettige oder verzweigte C_{1∼10}-Alkanolgruppen und diese Alkyl- oder Alkanolgruppen mit funktionellen Gruppen substituiert sein können.

7. Behandlungsmittel für Metalloberflächen gemäß einem der Ansprüche 1 bis 6, das weiterhin Schwermetalle oder deren Fluoride, Nitrate und Phosphate umfasst.

8. Behandlungsmittel für Metalloberflächen gemäß einem der Ansprüche 1 bis 6, das weiterhin ein Oxidationsmittel umfasst.

9. Behandlungsmittel für Metalloberflächen gemäß Anspruch 8, das weiterhin anorganische Säure umfasst.

10. Behandlungsmittel für Metalloberflächen gemäß Anspruch 9, das weiterhin 10 g/l Schwermetall umfasst.

11. Behandlungsmittel für Metalloberflächen gemäß Ansprüchen 7 oder 10, worin das genannte Schwermetall mindestens eines jener Schwermetalle, die Zirkonium, Molybdän, Wolfram, Niob, Nickel, Kobalt, Mangan und Tantal einschließen, ist.

12. Behandlungsmittel für Metalloberflächen gemäß Anspruch 8, worin das genannte Oxidationsmittel eines derjenigen ist, die Wasserstoffperoxid, Salpetersäure, Nitrit, Perborsäure, Chlorsäure, Chlorat, Bromsäure und Bromat einschließen.

13. Behandlungsmittel für Metalloberflächen gemäß einem der Ansprüche 1 bis 6, das weiterhin Phosphationen und Aluminiumionen enthält, wobei das genannte Behandlungsmittel für Metalloberflächen 0,01 ∼ 0,8 g/l der genannten Phosphationen umfasst.

14. Behandlungsmittel für Metalloberflächen gemäß einem der Ansprüche 1 bis 6, das weiterhin polyvalente Anionen enthält, wobei das genannte Behandlungsmittel für Metalloberflächen 0,03 ∼ 10 g/l der genannten polyvalenten Anionen umfasst.

15. Behandlungsmittel für Metalloberflächen gemäß Anspruch 14, worin das genannte polyvalente Anion mindestens eines oder mehrere jener ist, die Molybdänsäure, Wolframsäure, Vanadiumsäure, Phosphomolybdänsäure, Phosphowolframsäure und Silicowolframsäure und deren Salze einschließen.

16. Verfahren zur Behandlung von Metalloberflächen, wobei das genannte Verfahren die Kontaktbehandlung der Metalloberfläche mit dem Behandlungsmittel für Metalloberflächen gemäß einem der Ansprüche 1 bis 15, nachfolgendes Waschen mit Wasser und Trocknen umfasst.

17. Metallisches Material, behandelt mit einem Behandlungsmittel für Metalloberflächen gemäß einem der Ansprüche 1 bis 15.

## Revendications

1. Agent de traitement de surface métallique comprenant : de l'eau et 0,01 à 10 g/l d'un composé organique à haut poids moléculaire soluble dans l'eau, dispersable dans l'eau, ou émulsif ou de son sel ayant un poids moléculaire de 300 à 10 000 qui contient plus d'un atome d'azote, représenté par la formule [a] suivante et satisfait la condition [b] ou [c] suivante ; ou
0,01 à 10 g/l d'un composé organique à haut poids moléculaire soluble dans l'eau, dispersable dans l'eau ou émulsif ou de son sel ayant un poids moléculaire de 1 000 à 10 000 qui contient plus d'un atome de soufre cationique et satisfait la condition [d] suivante,
et, en plus de l'un des composés ci-dessus, au moins un composé choisi parmi les ions de métaux lourds dans une quantité de 0,01 à 10 g/l, les agents oxydants dans une quantité de 0,01 à 10 g/l, les acides inorganiques dans une quantité de 0,01 à 10 g/l, les ions aluminium dans une quantité de 0,01 à 0,5 g/l, les anions polyvalents dans une quantité de 0,003 à 10 g/l, les réactifs d'attaque dans une quantité de 0,005 à 5 g/l et les suppléments aux réactifs d'attaque dans une quantité de 0,003 à 5 g/l;
[a] : 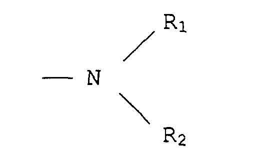 où R₁ et R₂ = H, OH ou des groupes alkyle à chaînes linéaires ou ramifiées en C_{1 à 10} avec des substitutions possibles, ou des groupes alcanol à chaînes linéaires ou ramifiées en C_{1 à 10} avec des substitutions possibles
ou 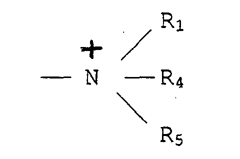 où R₃, R₄ et R₅ = H, OH ou des groupes alkyle à chaînes linéaires ou ramifiées en C_{1 à 10} avec des substitutions possibles, ou des groupes alcanol à chaînes linéaires ou ramifiées en C_{1 à 10} avec des substitutions possibles ;
[b] :
contenant 1 à 5 groupes phénoliques, 1 à 5 groupes hydroxyle et 1 à 10 atomes d'azote par poids moléculaire de 500;
[c] :
étant une résine acrylique qui est un copolymère comprenant des monomères représentés par les formules structurales [e], [f] et [g] suivantes, 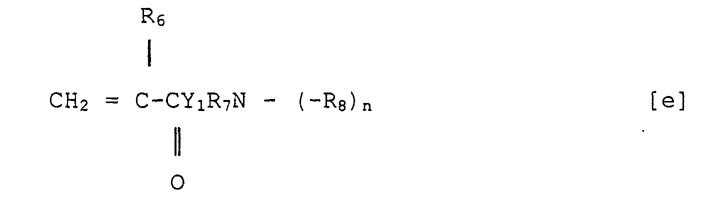 où
R₆ = H ou un groupe méthyle,
R₇ = un groupe alkylène en C_{1~5},
R₈ = un groupe alkyle en C_{1~5},
Y₁ = -NH- ou -O-,
n = 2 ou 3 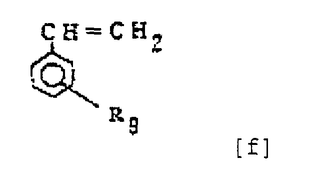
où R₉ = des groupes méthyle, éthyle, butyle ou tert-butyle 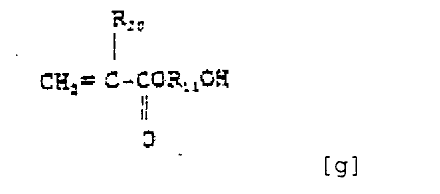 où R₁₀ = H ou un groupe méthyle,
R₁₁ = un groupe alkylène en C_{1 à 5} ;
[d] contenant 1 à 5 groupes phénoliques, 1 à 12 groupes hydroxyle et 0,1 à 7 atomes de soufre cationique par poids moléculaire de 500.

2. Agent de traitement de surface métallique selon la revendication 1, dans lequel ledit composé satisfaisant la condition [b] est une résine phénolique comprenant le motif répétitif représenté par la formule [h] suivante 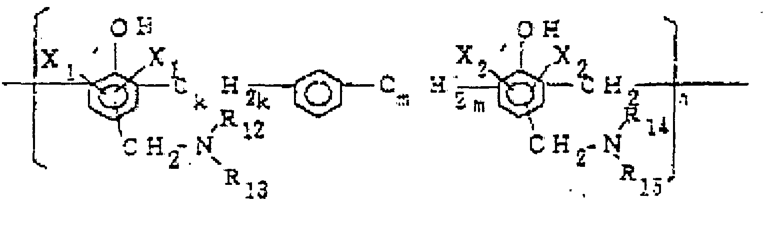 [h]
où R₁₂, R₁₃, R₁₄ et R₁₅ = H, des groupes alkyle ou alcanol en C₁₋₅ avec ou sans substitution,
X₁, X₁', X₂ et X₂' = H, OH ou des groupes alkyle en C_{1 à 5} avec ou sans substitution
k et m = 1 à 5 et n = 1 à 3.

3. Agent de traitement de surface métallique selon la revendication 1, dans lequel ledit composé qui satisfait la condition [b] est une résine phénolique où ladite résine phénolique est un produit de polycondensation ou son sel comprenant un monomère de composé phénolique ayant la structure [i] suivante, un monomère de dialkylbenzène glycol ayant la structure [j] suivante, le formaldéhyde et une amine ayant la structure [k] suivante, 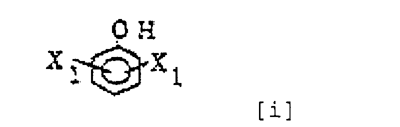 où X₁, X₁', X₂ et X₂' = H, OH ou des groupes alkyle en C_{1 à 5} avec ou sans substitution 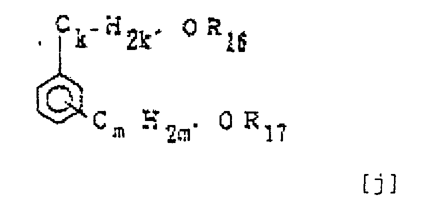 où R₁₆ et R₁₇ = H, OH ou des groupes alkyle en C_{1 à 5} avec ou sans substitution
k' et m' = 1 à 5
Formule [k] : 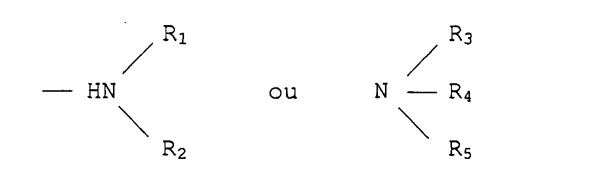 où R₁ à R₅ = H, OH ou des groupes alkyle à chaînes linéaires ou ramifiées en C_{1 à 10} avec des substitutions possibles ou des groupes alcanol à chaînes linéaires ou ramifiées en C_{1 à 10} avec des substitutions possibles.

4. Agent de traitement de surface métallique selon la revendication 1, dans lequel ledit composé qui satisfait la condition [b] est une résine phénolique qui est obtenue en faisant réagir un produit de condensation phénolique qui est préparé en faisant réagir, en présence d'acides organique ou inorganique comme catalyseur, 1 mole d'un monomère de composé phénolique représenté par la formule [i] décrite ci-dessus, 0,02 à 0,6 mole d'un monomère de dialkylbenzène glycol représenté par la formule [j] décrite ci-dessus et du formaldéhyde dont la quantité est ajustée de sorte que la somme des quantités en formaldéhyde et en monomère de dialkylbenzène glycol représenté par la formule [j] décrite ci-dessus soit de 0,7 à 0,9 mole, avec 0,5 à 2,0 moles d'une amine représentée par la formule [k] décrite ci-dessus et la quantité équimolaire de formaldéhyde comme celle de ladite amine.

5. Agent de traitement de surface métallique selon la revendication 1, dans lequel ledit composé qui satisfait la condition [b] est une résine phénolique qui comprend un motif répétitif phénolique représenté par la formule [l] suivante et un autre motif répétitif bisphénolique représenté par les formules [m] et/ou [n] suivantes, leur rapport en poids de [l] : [m] et/ou [n] étant de 90 : 10 à 10 : 90, 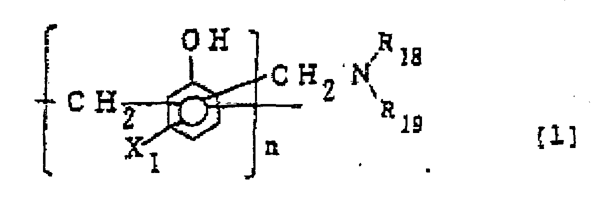 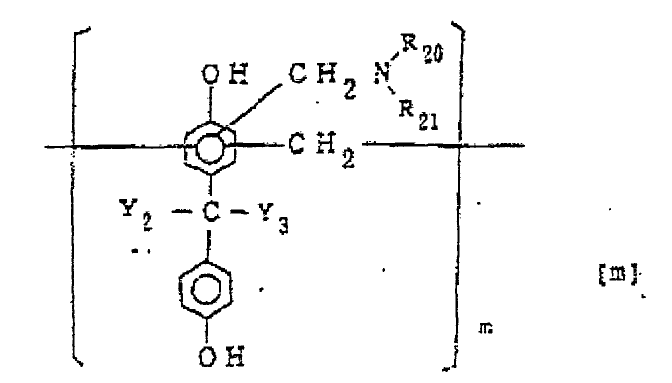 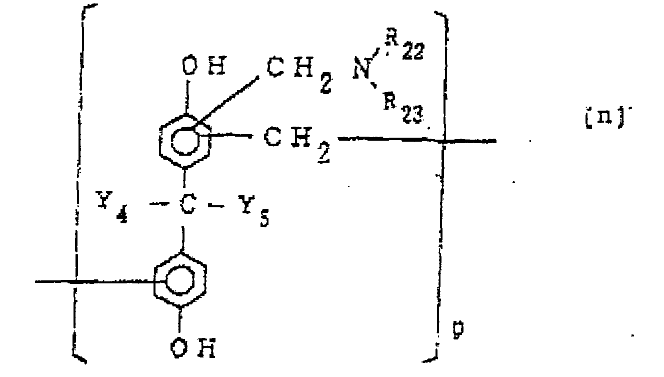 où R₁₈, R₁₉, R₂₀, R₂₁, R₂₂, R₂₃, X₁, Y₂, Y₃, Y₄ et Y₅ = H, OH, des groupes alkyle à chaînes linéaires ou ramifiées en C_{1 à 10} ou des groupes alcanol à chaînes linéaires ou ramifiées en C_{1 à 10}, et m, n et p sont 2 à 50, respectivement ; ces groupes alkyle ou alcanol peuvent être substitués avec des groupes fonctionnels.

6. Agent de traitement de surface métallique selon la revendication 1, dans lequel ledit composé qui satisfait la condition [b] est une résine phénolique qui est un produit de polycondensation de phénol-bisphénol-formaldéhyde ou son sel qui est un produit de condensation composé d'un composé phénolique ayant la structure [i] décrite ci-dessus, d'un composé bisphénolique ayant la structure [o] montrée ci-dessous et du formaldéhyde, et lié à au moins un type d'amines ayant la structure [k] décrite ci-dessus, où le rapport molaire dudit composé phénolique [i] et dudit composé bisphénolique [o] dans ledit produit de polycondensation de phénol-bisphénol-formaldéhyde ou son sel est 9 : 1 à 1 : 9, 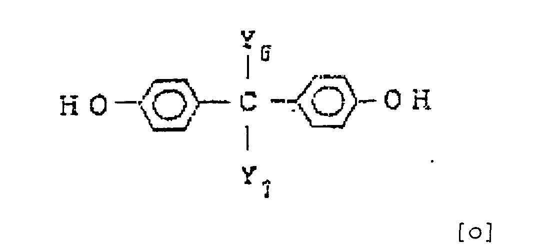 où Y₆ et Y₇ = H, OH ou des groupes alkyle à chaînes linéaires ou ramifiées en C_{1 à 10} ou des groupes alcanol linéaires ou ramifiés en C_{1 à 10} ; ces groupes alkyle ou alcanol peuvent être substitués avec des groupes fonctionnels.

7. Agent de traitement de surface métallique selon l'une quelconque des revendications 1 à 6 qui comprend en outre un métal lourd ou ses fluorure, nitrate et phosphate.

8. Agent de traitement de surface métallique selon l'une quelconque des revendications 1 à 6 qui contient en outre un agent oxydant.

9. Agent de traitement de surface métallique selon la revendication 8 qui comprend en outre un acide inorganique.

10. Agent de traitement de surface métallique selon la revendication 9 qui comprend en outre un métal lourd à 10 g/l.

11. Agent de traitement de surface métallique selon les revendications 7 ou 10, dans lequel ledit métal lourd est au moins l'un quelconque de ceux incluant le zirconium, le molybdène, le tungstène, le niobium, le nickel, le cobalt, le manganèse et le tantale.

12. Agent de traitement de surface métallique selon la revendication 8, dans lequel ledit agent oxydant est l'un quelconque de ceux incluant le peroxyde d'hydrogène, l'acide nitreux, le nitrite, l'acide perborique, l'acide chlorique, le chlorate, l'acide bromique et le bromate.

13. Agent de traitement de surface métallique selon l'une quelconque des revendications 1 à 6 qui contient en outre des ions phosphate et des ions aluminium, dans lequel ledit agent de traitement de surface métallique comprend lesdits ions phosphate à 0,01 à 0,8 g/l.

14. Agent de traitement de surface métallique selon l'une quelconque des revendications 1 à 6 qui contient en outre des anions polyvalents, dans lequel ledit agent de traitement de surface métallique comprend lesdits anions polyvalents à 0,03 à 10 g/l.

15. Agent de traitement de surface métallique selon la revendication 14, dans lequel ledit anion polyvalent est au moins un ou plusieurs de ceux incluant l'acide molybdènique, l'acide tungstènique, l'acide vanadique, l'acide phosphomolybdènique, l'acide phosphotungstènique et l'acide silicotungstènique et leurs sels.

16. Procédé de traitement de surface métallique, dans lequel ledit procédé comprend le traitement par contact de la surface métallique avec l'agent de traitement de surface métallique selon l'une quelconque des revendications 1 à 15, successivement un lavage avec de l'eau et un séchage.

17. Matériau métallique traité avec l'agent de traitement de surface métallique selon l'une quelconque des revendications 1 à 15.
